(19) Europäisches Patentamt / European Patent Office / Office européen des brevets

(11) **EP 4 429 142 A1**

(12) **EUROPEAN PATENT APPLICATION**
published in accordance with Art. 153(4) EPC

(43) Date of publication:
**11.09.2024 Bulletin 2024/37**

(21) Application number: **22890459.5**

(22) Date of filing: **04.11.2022**

(51) International Patent Classification (IPC):
*H04L 1/16* (2023.01)       *H04L 1/18* (2023.01)
*H04L 5/00* (2006.01)       *H04W 72/12* (2023.01)
*H04W 72/04* (2023.01)

(52) Cooperative Patent Classification (CPC):
H04L 1/16; H04L 1/18; H04L 5/00; H04W 72/04;
H04W 72/12

(86) International application number:
**PCT/KR2022/017280**

(87) International publication number:
**WO 2023/080728 (11.05.2023 Gazette 2023/19)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **04.11.2021 KR 20210150780**

(71) Applicant: **LG Electronics Inc.**
**Yeongdeungpo-gu**
**Seoul 07336 (KR)**

(72) Inventors:
• **LEE, Youngdae**
  **Seoul 06772 (KR)**
• **YANG, Suckchel**
  **Seoul 06772 (KR)**
• **KIM, Seonwook**
  **Seoul 06772 (KR)**

(74) Representative: **Frenkel, Matthias Alexander**
**Wuesthoff & Wuesthoff**
**Patentanwälte und Rechtsanwalt PartG mbB**
**Schweigerstraße 2**
**81541 München (DE)**

(54) **METHOD AND DEVICE FOR TRANSMITTING OR RECEIVING HYBRID AUTOMATIC REPEAT REQUEST ACKNOWLEDGMENT INFORMATION IN WIRELESS COMMUNICATION SYSTEM**

(57)     Disclosed are a method and device for transmitting or receiving hybrid automatic repeat request (HARQ) acknowledgement (ACK) information in a wireless communication system. The method for transmitting HARQ-ACK information by a terminal in a wireless communication system according to an embodiment of the present disclosure may include the steps of: generating N (N>1) HARQ-ACK information bits related to a second HARQ-ACK report mode; and transmitting HARQ-ACK information in one physical uplink control channel (PUCCH) to a network by applying one of a first scheme following a first HARQ-ACK report mode or a second scheme for selecting one PUCCH resource among PUCCH resource sets on the basis of a value of the N HARQ-ACK information bits, wherein one of the first scheme or the second scheme is applied on the basis of a configuration by the network.

FIG.8

Generate N HARQ-ACK information bits related to second HARQ-ACK report mode — S810

Transmit, to network, in one PUCCH, HARQ-ACK information with applying one of first scheme or second scheme — S820

**Description**

[Technical Field]

The present disclosure relates to a wireless communication system, and more particularly, to a method and a device for transmitting or receiving HARQ-ACK information in a wireless communication system.

[Background Art]

A mobile communication system has been developed to provide a voice service while guaranteeing mobility of users. However, a mobile communication system has extended even to a data service as well as a voice service, and currently, an explosive traffic increase has caused shortage of resources and users have demanded a faster service, so a more advanced mobile communication system has been required.

The requirements of a next-generation mobile communication system at large should be able to support accommodation of explosive data traffic, a remarkable increase in a transmission rate per user, accommodation of the significantly increased number of connected devices, very low End-to-End latency and high energy efficiency. To this end, a variety of technologies such as Dual Connectivity, Massive Multiple Input Multiple Output (Massive MIMO), In-band Full Duplex, Non-Orthogonal Multiple Access (NOMA), Super wideband Support, Device Networking, etc. have been researched.

[Disclosure]

[Technical Problem]

A technical problem of the present disclosure is to provide a method and a device for multiplexing and transmitting or receiving multiple HARQ-ACK information in a NACK only-based report mode in a wireless communication system.

An additional technical problem of the present disclosure is to provide a method and a device for transmitting or receiving multiplexed HARQ-ACK information based on at least one of a candidate resource mapped to HARQ-ACK information, drop of partial HARQ-ACK information or transform to HARQ-ACK information in another report mode for multiple HARQ-ACK information in a NACK only-based report mode in a wireless communication system.

The technical objects to be achieved by the present disclosure are not limited to the above-described technical objects, and other technical objects which are not described herein will be clearly understood by those skilled in the pertinent art from the following description.

[Technical Solution]

A method for transmitting HARQ-ACK information by a terminal in a wireless communication system according to an aspect of the present disclosure includes generating N (N>1) HARQ-ACK information bits related to a second HARQ-ACK report mode; and transmitting, to a network, HARQ-ACK information in one physical uplink control channel (PUCCH) with applying one of a first scheme according to a first HARQ-ACK report mode or a second scheme by selecting one PUCCH resource among PUCCH resource sets based on values of the N HARQ-ACK information bits, wherein one of the first scheme or the second scheme may be applied based on a configuration by the network.

A method for receiving hybrid automatic repeat request(HARQ)-acknowledgement(ACK) information by a base station in a wireless communication system according to an additional aspect of the present disclosure includes transmitting to a terminal at least one of at least one multicast DCI format or at least one multicast physical downlink shared channel (PDSCH); and for N (N>1) HARQ-ACK information bits related to a second HARQ-ACK report mode generated based on at least one of the at least one DCI format or the at least one PDSCH, receiving, from the terminal, in one physical uplink control channel (PUCCH), HARQ-ACK information to which one of a first scheme according to a first HARQ-ACK report mode or a second scheme by selecting one PUCCH resource among PUCCH resource sets based on values of the N HARQ-ACK information bits is applied, wherein one of the first scheme or the second scheme may be applied based on a configuration by the base station.

[Technical Effects]

According to the present disclosure, a method and a device for multiplexing and transmitting or receiving multiple HARQ-ACK information in a NACK only-based report mode in a wireless communication system may be provided.

According to the present disclosure, a method and a device for transmitting or receiving multiplexed HARQ-ACK information based on at least one of a candidate resource mapped to HARQ-ACK information, drop of partial HARQ-ACK information or transform to HARQ-ACK information in another report mode for multiple HARQ-ACK information in a NACK only-based report mode in a wireless communication system may be provided.

Effects achievable by the present disclosure are not limited to the above-described effects, and other effects which are not described herein may be clearly understood by those skilled in the pertinent art from the following description.

[Description of Diagrams]

Accompanying drawings included as part of detailed description for understanding the present disclosure provide embodiments of the present disclosure and describe technical features of the present disclosure with detailed description.

FIG. 1 illustrates a structure of a wireless communication system to which the present disclosure may be applied.
FIG. 2 illustrates a frame structure in a wireless communication system to which the present disclosure may be applied.
FIG. 3 illustrates a resource grid in a wireless communication system to which the present disclosure may be applied.
FIG. 4 illustrates a physical resource block in a wireless communication system to which the present disclosure may be applied.
FIG. 5 illustrates a slot structure in a wireless communication system to which the present disclosure may be applied.
FIG. 6 illustrates physical channels used in a wireless communication system to which the present disclosure may be applied and a general signal transmission and reception method using them.
FIG. 7 exemplarily shows an overlapping situation of HARQ-ACK information in a NACK only-based report mode to which the present disclosure may be applied.
FIG. 8 is a diagram for describing a HARQ-ACK transmission method of a terminal according to an embodiment of the present disclosure.
FIG. 9 is a diagram for describing a HARQ-ACK reception method of a base station according to an embodiment of the present disclosure.
FIG. 10 is a diagram for illustrating a signaling process of a network side and a terminal according to an embodiment of the present disclosure.
FIG. 11 illustrates a block diagram of a wireless communication device according to an embodiment of the present disclosure.

[Best Mode]

Hereinafter, embodiments according to the present disclosure will be described in detail by referring to accompanying drawings. Detailed description to be disclosed with accompanying drawings is to describe exemplary embodiments of the present disclosure and is not to represent the only embodiment that the present disclosure may be implemented. The following detailed description includes specific details to provide complete understanding of the present disclosure. However, those skilled in the pertinent art knows that the present disclosure may be implemented without such specific details.

In some cases, known structures and devices may be omitted or may be shown in a form of a block diagram based on a core function of each structure and device in order to prevent a concept of the present disclosure from being ambiguous.

In the present disclosure, when an element is referred to as being "connected", "combined" or "linked" to another element, it may include an indirect connection relation that yet another element presents therebetween as well as a direct connection relation. In addition, in the present disclosure, a term, "include" or "have", specifies the presence of a mentioned feature, step, operation, component and/or element, but it does not exclude the presence or addition of one or more other features, stages, operations, components, elements and/or their groups.

In the present disclosure, a term such as "first", "second", etc. is used only to distinguish one element from other element and is not used to limit elements, and unless otherwise specified, it does not limit an order or importance, etc. between elements. Accordingly, within a scope of the present disclosure, a first element in an embodiment may be referred to as a second element in another embodiment and likewise, a second element in an embodiment may be referred to as a first element in another embodiment.

A term used in the present disclosure is to describe a specific embodiment, and is not to limit a claim. As used in a described and attached claim of an embodiment, a singular form is intended to include a plural form, unless the context clearly indicates otherwise. A term used in the present disclosure, "and/or", may refer to one of related enumerated items or it means that it refers to and includes any and all possible combinations of two or more of them. In addition, "/" between words in the present disclosure has the same meaning as "and/or", unless otherwise described.

The present disclosure describes a wireless communication network or a wireless communication system, and an operation performed in a wireless communication network may be performed in a process in which a device (e.g., a base station) controlling a corresponding wireless communication network controls a network and transmits or receives a signal, or may be performed in a process in which a terminal associated to a corresponding wireless network transmits or receives a signal with a network or between terminals.

In the present disclosure, transmitting or receiving a channel includes a meaning of transmitting or receiving information or a signal through a corresponding channel. For example, transmitting a control channel means that control information or a control signal is transmitted through a control channel. Similarly, transmitting a data channel means that data information or a data signal is transmitted through a data channel.

Hereinafter, a downlink (DL) means a communication from a base station to a terminal and an uplink (UL) means a communication from a terminal to a base station. In a downlink, a transmitter may be part of a base station and a receiver may be part of a terminal. In an uplink, a transmitter may be part of a terminal and a receiver may be part of a base station. A base station may be expressed as a first communication device and a terminal may be expressed as a second communication device. A base station (BS) may be substituted with a term such as a fixed station, a Node B, an eNB(evolved-NodeB), a gNB(Next Generation NodeB), a BTS(base transceiver system), an Access Point(AP), a Network(5G network), an AI(Artificial Intelligence) system/module, an RSU(road side unit), a robot, a drone(UAV: Unmanned Aerial Vehicle), an AR(Augmented Reality) device, a VR(Virtual Reality) device, etc. In addition, a terminal may be fixed or mobile, and may be substituted with a term such as a UE(User Equipment), an MS(Mobile Station), a UT(user terminal), an MSS(Mobile Subscriber Station), an SS(Subscriber Station), an AMS(Advanced Mobile Station), a WT(Wireless terminal), an MTC(Machine-Type Communication) device, an M2M(Machine-to-Machine) device, a D2D(Device-to-Device) device, a vehicle, an RSU(road side unit), a robot, an AI(Artificial Intelligence) module, a drone(UAV: Unmanned Aerial Vehicle), an AR(Augmented Reality) device, a VR(Virtual Reality) device, etc.

The following description may be used for a variety of radio access systems such as CDMA, FDMA, TDMA, OFDMA, SC-FDMA, etc. CDMA may be implemented by a wireless technology such as UTRA(Universal Terrestrial Radio Access) or CDMA2000. TDMA may be implemented by a radio technology such as GSM(Global System for Mobile communications)/GPRS(General Packet Radio Service)/EDGE(Enhanced Data Rates for GSM Evolution). OFDMA may be implemented by a radio technology such as IEEE 802.11(Wi-Fi), IEEE 802.16(WiMAX), IEEE 802-20, E-UTRA(Evolved UTRA), etc. UTRA is a part of a UMTS(Universal Mobile Telecommunications System). 3GPP(3rd Generation Partnership Project) LTE(Long Term Evolution) is a part of an E-UMTS(Evolved UMTS) using E-UTRA and LTE-A(Advanced)/LTE-A pro is an advanced version of 3GPP LTE. 3GPP NR(New Radio or New Radio Access Technology) is an advanced version of 3GPP LTE/LTE-A/LTE-A pro.

To clarify description, it is described based on a 3GPP communication system (e.g., LTE-A, NR), but a technical idea of the present disclosure is not limited thereto. LTE means a technology after 3GPP TS(Technical Specification) 36.xxx Release 8. In detail, an LTE technology in or after 3GPP TS 36.xxx Release 10 is referred to as LTE-A and an LTE technology in or after 3GPP TS 36.xxx Release 13 is referred to as LTE-A pro. 3GPP NR means a technology in or after TS 38.xxx Release 15. LTE/NR may be referred to as a 3GPP system, "xxx" means a detailed number for a standard document. LTE/NR may be commonly referred to as a 3GPP system. For a background art, a term, an abbreviation, etc. used to describe the present disclosure, matters described in a standard document disclosed before the present disclosure may be referred to. For example, the following document may be referred to.

For 3GPP LTE, TS 36.211(physical channels and modulation), TS 36.212(multiplexing and channel coding), TS 36.213(physical layer procedures), TS 36.300(overall description), TS 36.331(radio resource control) may be referred to.

For 3GPP NR, TS 38.211(physical channels and modulation), TS 38.212(multiplexing and channel coding), TS 38.213(physical layer procedures for control), TS 38.214(physical layer procedures for data), TS 38.300(NR and NG-RAN(New Generation-Radio Access Network) overall description), TS 38.331(radio resource control protocol specification) may be referred to.

Abbreviations of terms which may be used in the present disclosure is defined as follows.

BM: beam management
CQI: Channel Quality Indicator
CRI: channel state information - reference signal resource indicator
CSI: channel state information
CSI-IM: channel state information - interference measurement
CSI-RS: channel state information - reference signal
DMRS: demodulation reference signal
FDM: frequency division multiplexing
FFT: fast Fourier transform
IFDMA: interleaved frequency division multiple access
IFFT: inverse fast Fourier transform

L1-RSRP: Layer 1 reference signal received power

L1-RSRQ: Layer 1 reference signal received quality

MAC: medium access control

NZP: non-zero power

OFDM: orthogonal frequency division multiplexing

PDCCH: physical downlink control channel

PDSCH: physical downlink shared channel

PMI: precoding matrix indicator

RE: resource element

RI: Rank indicator

RRC: radio resource control

RSSI: received signal strength indicator

Rx: Reception

QCL: quasi co-location

SINR: signal to interference and noise ratio

SSB (or SS/PBCH block): Synchronization signal block (including PSS (primary synchronization signal), SSS (secondary synchronization signal) and PBCH (physical broadcast channel))

TDM: time division multiplexing

TRP: transmission and reception point

TRS: tracking reference signal

Tx: transmission

UE: user equipment

ZP: zero power

Overall System

As more communication devices have required a higher capacity, a need for an improved mobile broadband communication compared to the existing radio access technology (RAT) has emerged. In addition, massive MTC (Machine Type Communications) providing a variety of services anytime and anywhere by connecting a plurality of devices and things is also one of main issues which will be considered in a next-generation communication. Furthermore, a communication system design considering a service/a terminal sensitive to reliability and latency is also discussed. As such, introduction of a next-generation RAT considering eMBB(enhanced mobile broadband communication), mMTC(massive MTC), URLLC(Ultra-Reliable and Low Latency Communication), etc. is discussed and, for convenience, a corresponding technology is referred to as NR in the present disclosure. NR is an expression which represents an example of a 5G RAT.

A new RAT system including NR uses an OFDM transmission method or a transmission method similar to it. A new RAT system may follow OFDM parameters different from OFDM parameters of LTE. Alternatively, a new RAT system follows a numerology of the existing LTE/LTE-A as it is, but may support a wider system bandwidth (e.g., 100MHz). Alternatively, one cell may support a plurality of numerologies. In other words, terminals which operate in accordance with different numerologies may coexist in one cell.

A numerology corresponds to one subcarrier spacing in a frequency domain. As a reference subcarrier spacing is scaled by an integer N, a different numerology may be defined.

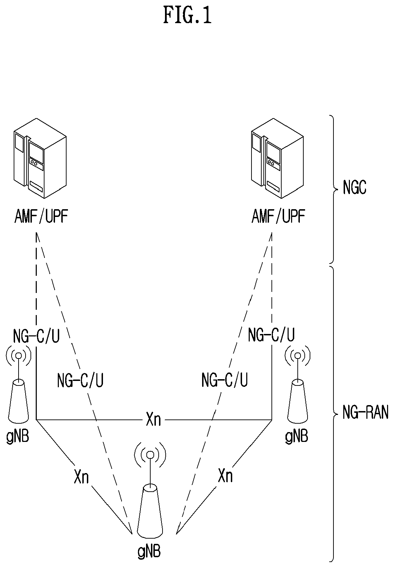

FIG. 1 illustrates a structure of a wireless communication system to which the present disclosure may be applied.

In reference to FIG. 1, NG-RAN is configured with gNBs which provide a control plane (RRC) protocol end for a NG-RA(NG-Radio Access) user plane (i.e., a new AS(access stratum) sublayer/PDCP(Packet Data Convergence Protocol)/RLC(Radio Link Control)/MAC/PHY) and UE. The gNBs are interconnected through a Xn interface. The gNB, in addition, is connected to an NGC(New Generation Core) through an NG interface. In more detail, the gNB is connected to an AMF(Access and Mobility Management Function) through an N2 interface, and is connected to a UPF(User Plane Function) through an N3 interface.

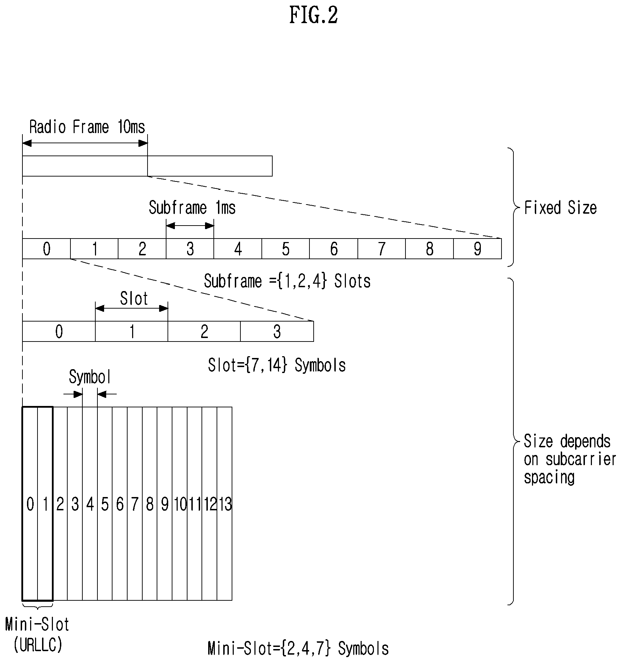

FIG. 2 illustrates a frame structure in a wireless communication system to which the present disclosure may be applied.

A NR system may support a plurality of numerologies. Here, a numerology may be defined by a subcarrier spacing and a cyclic prefix (CP) overhead. Here, a plurality of subcarrier spacings may be derived by scaling a basic (reference) subcarrier spacing by an integer N (or, $\mu$). In addition, although it is assumed that a very low subcarrier spacing is not used in a very high carrier frequency, a used numerology may be selected independently from a frequency band. In addition, a variety of frame structures according to a plurality of numerologies may be supported in a NR system.

Hereinafter, an OFDM numerology and frame structure which may be considered in a NR system will be described. A plurality of OFDM numerologies supported in a NR system may be defined as in the following Table 1.

[Table 1]

| μ | $\Delta f = 2^{\mu} \cdot 15$ [kHz] | CP |
|---|---|---|
| 0 | 15 | Normal |
| 1 | 30 | Normal |
| 2 | 60 | Normal, Extended |
| 3 | 120 | Normal |
| 4 | 240 | Normal |

NR supports a plurality of numerologies (or subcarrier spacings (SCS)) for supporting a variety of 5G services. For example, when a SCS is 15kHz, a wide area in traditional cellular bands is supported, and when a SCS is 30kHz/60kHz, dense-urban, lower latency and a wider carrier bandwidth are supported, and when a SCS is 60kHz or higher, a bandwidth wider than 24.25GHz is supported to overcome a phase noise.

An NR frequency band is defined as a frequency range in two types (FR1, FR2). FR1, FR2 may be configured as in the following Table 2. In addition, FR2 may mean a millimeter wave (mmW).

[Table 2]

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

Regarding a frame structure in an NR system, a size of a variety of fields in a time domain is expresses as a multiple of a time unit of $T_c=1/(\Delta f_{max} \cdot N_f)$. Here, $\Delta f_{max}$ is $480 \cdot 10^3$ Hz and $N_\varepsilon$ is 4096. Downlink and uplink transmission is configured (organized) with a radio frame having a duration of $T_f=1/(\Delta f_{max} N_f/100) \cdot T_c = 10$ms. Here, a radio frame is configured with 10 subframes having a duration of $T_s f=(Af_{max} Nf/1000) T_c = 1$ms, respectively. In this case, there may be one set of frames for an uplink and one set of frames for a downlink. In addition, transmission in an uplink frame No. i from a terminal should start earlier by $T_{TA}=(N_{TA}+N_{TA,offset})T_c$ than a corresponding downlink frame in a corresponding terminal starts. For a subcarrier spacing configuration $\mu$, slots are numbered in an increasing order of $n_s^{\mu} \in \{0,..., N_{slot}^{subframe,\mu}-1\}$ in a subframe and are numbered in an increasing order of $n_{s,f}^{\mu} \in \{0,..., N_{slot}^{frame,\mu}-1\}$ in a radio frame. One slot is configured with $N_{symb}^{slot}$ consecutive OFDM symbols and $N_{symb}^{slot}$ is determined according to CP. A start of a slot $n_s^{\mu}$ in a subframe is temporally arranged with a start of an OFDM symbol $n_s^{\mu} N_{symb}^{slot}$ in the same subframe. All terminals may not perform transmission and reception at the same time, which means that all OFDM symbols of a downlink slot or an uplink slot may not be used.

Table 3 represents the number of OFDM symbols per slot ($N_{symb}^{slot}$), the number of slots per radio frame ($N_{slot}^{frame,\mu}$) and the number of slots per subframe ($N_{slot}^{subframe,\mu}$) in a normal CP and Table 4 represents the number of OFDM symbols per slot, the number of slots per radio frame and the number of slots per subframe in an extended CP.

[Table 3]

| μ | $N_{symb}^{slot}$ | $N_{slot}^{frame,\mu}$ | $N_{slot}^{subframe,\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

[Table 4]

| $\mu$ | $N_{symb}^{slot}$ | $N_{slot}^{frame,\mu}$ | $N_{slot}^{subframe,\mu}$ |
|---|---|---|---|
| 2 | 12 | 40 | 4 |

FIG. 2 is an example on $\mu$=2 (SCS is 60kHz), 1 subframe may include 4 slots referring to Table 3. 1 subframe={ 1,2,4} slot shown in FIG. 2 is an example, the number of slots which may be included in 1 subframe is defined as in Table 3 or Table 4. In addition, a mini-slot may include 2, 4 or 7 symbols or more or less symbols.

Regarding a physical resource in a NR system, an antenna port, a resource grid, a resource element, a resource block, a carrier part, etc. may be considered. Hereinafter, the physical resources which may be considered in an NR system will be described in detail.

First, in relation to an antenna port, an antenna port is defined so that a channel where a symbol in an antenna port is carried can be inferred from a channel where other symbol in the same antenna port is carried. When a large-scale property of a channel where a symbol in one antenna port is carried may be inferred from a channel where a symbol in other antenna port is carried, it may be said that 2 antenna ports are in a QC/QCL(quasi co-located or quasi co-location) relationship. In this case, the large-scale property includes at least one of delay spread, doppler spread, frequency shift, average received power, received timing.

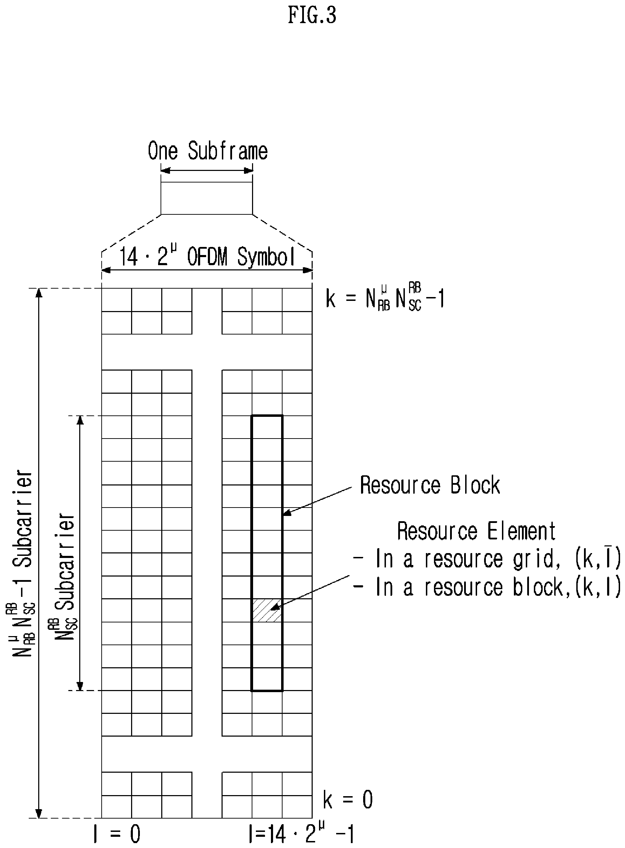

FIG. 3 illustrates a resource grid in a wireless communication system to which the present disclosure may be applied.

In reference to FIG. 3, it is illustratively described that a resource grid is configured with $N_{RB}^{\mu}N_{sc}^{RB}$ subcarriers in a frequency domain and one subframe is configured with $14 \cdot 2^{\mu}$ OFDM symbols, but it is not limited thereto. In an NR system, a transmitted signal is described by OFDM symbols of $2^{\mu}N_{symb}^{(\mu)}$ and one or more resource grids configured with $N_{RB}^{\mu}N_{sc}^{RB}$ subcarriers. Here, $N_{RB}^{\mu} \leq N_{RB}^{max,\mu}$. The $N_{RB}^{max,\mu}$ represents a maximum transmission bandwidth, which may be different between an uplink and a downlink as well as between numerologies. In this case, one resource grid may be configured per $\mu$ and antenna port p. Each element of a resource grid for $\mu$ and an antenna port p is referred to as a resource element and is uniquely identified by an index pair (k,l'). Here, $k=0,...,N_{RB}^{\mu}N_{sc}^{RB}-1$ is an index in a frequency domain and $l'=0,...,2^{\mu}N_{symb}^{(\mu)}-1$ refers to a position of a symbol in a subframe. When referring to a resource element in a slot, an index pair (k,l) is used. Here, $1=0,...,N_{symb}^{\mu}-1$. A resource element (k,l') for $\mu$ and an antenna port p corresponds to a complex value, $a_{k,l'}^{(p,\mu)}$. When there is no risk of confusion or when a specific antenna port or numerology is not specified, indexes p and $\mu$ may be dropped, whereupon a complex value may be $a_{k,l'}^{(p)}$ or $a_{k,l'}$. In addition, a resource block (RB) is defined as $N_{sc}^{RB}=12$ consecutive subcarriers in a frequency domain.

Point A plays a role as a common reference point of a resource block grid and is obtained as follows.

offsetToPointA for a primary cell (PCell) downlink represents a frequency offset between point A and the lowest subcarrier of the lowest resource block overlapped with a SS/PBCH block which is used by a terminal for an initial cell selection. It is expressed in resource block units assuming a 15kHz subcarrier spacing for FR1 and a 60kHz subcarrier spacing for FR2.

absoluteFrequencyPointA represents a frequency-position of point A expressed as in ARFCN (absolute radio-frequency channel number).

Common resource blocks are numbered from 0 to the top in a frequency domain for a subcarrier spacing configuration $\mu$. The center of subcarrier 0 of common resource block 0 for a subcarrier spacing configuration $\mu$ is identical to 'point A'. A relationship between a common resource block number $n_{CRB}^{\mu}$ and a resource element (k,l) for a subcarrier spacing configuration $\mu$ in a frequency domain is given as in the following Equation 1.

【Equation 1】

$$n_{CRB}^{\mu} = \left\lfloor \frac{k}{N_{sc}^{RB}} \right\rfloor$$

In Equation 1, k is defined relatively to point A so that k=0 corresponds to a subcarrier centering in point A. Physical resource blocks are numbered from 0 to $N_{BWP,i}^{size,\mu}-1$ in a bandwidth part (BWP) and i is a number of a BWP. A relationship between a physical resource block $n_{PRB}$ and a common resource block $n_{CRB}$ in BWP i is given by the following Equation 2.

【Equation 2】

$$n^{\mu}_{CRB} = n^{\mu}_{PRB} + N^{start,\mu}_{BWP,i}$$

$N_{BWP,i}^{start,\mu}$ is a common resource block that a BWP starts relatively to common resource block 0.

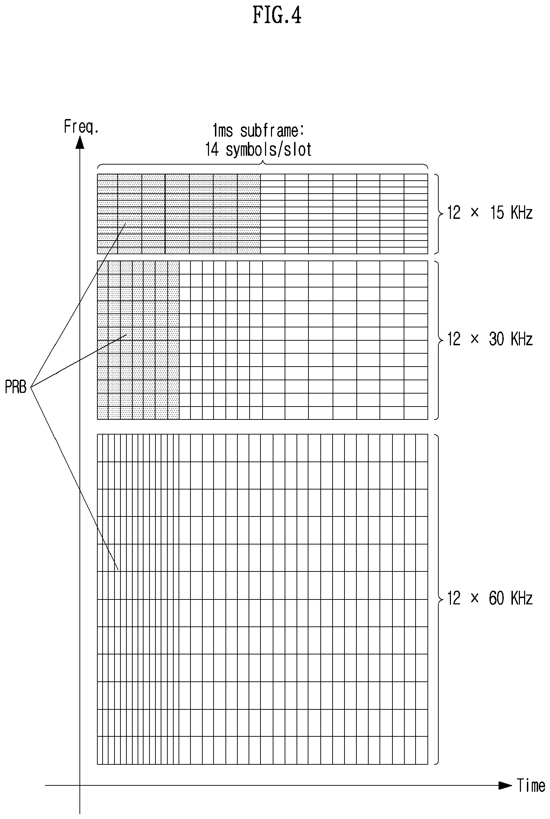

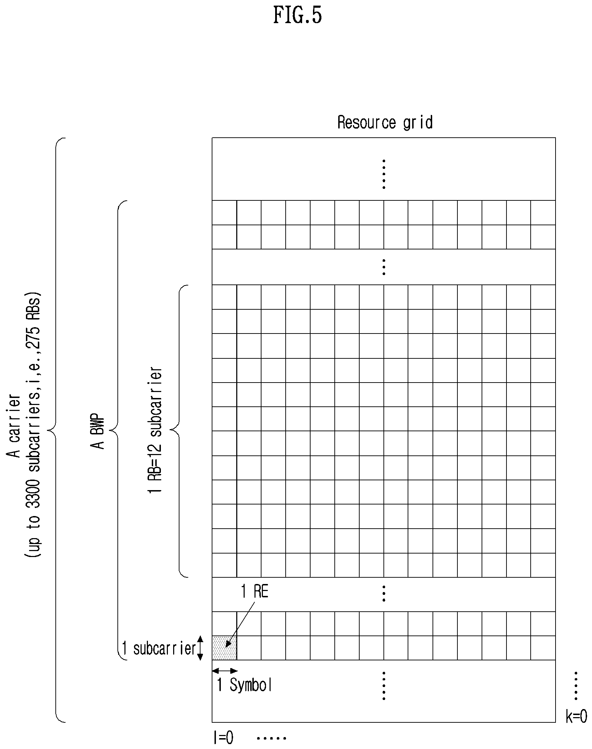

FIG. 4 illustrates a physical resource block in a wireless communication system to which the present disclosure may be applied. And, FIG. 5 illustrates a slot structure in a wireless communication system to which the present disclosure may be applied.

In reference to FIG. 4 and FIG. 5, a slot includes a plurality of symbols in a time domain. For example, for a normal CP, one slot includes 7 symbols, but for an extended CP, one slot includes 6 symbols.

A carrier includes a plurality of subcarriers in a frequency domain. An RB (Resource Block) is defined as a plurality of (e.g., 12) consecutive subcarriers in a frequency domain. A BWP(Bandwidth Part) is defined as a plurality of consecutive (physical) resource blocks in a frequency domain and may correspond to one numerology (e.g., an SCS, a CP length, etc.). A carrier may include a maximum N (e.g., 5) BWPs. A data communication may be performed through an activated BWP and only one BWP may be activated for one terminal. In a resource grid, each element is referred to as a resource element (RE) and one complex symbol may be mapped.

In an NR system, up to 400 MHz may be supported per component carrier (CC). If a terminal operating in such a wideband CC always operates turning on a radio frequency (FR) chip for the whole CC, terminal battery consumption may increase. Alternatively, when several application cases operating in one wideband CC (e.g., eMBB, URLLC, Mmtc, V2X, etc.) are considered, a different numerology (e.g., a subcarrier spacing, etc.) may be supported per frequency band in a corresponding CC. Alternatively, each terminal may have a different capability for the maximum bandwidth. By considering it, a base station may indicate a terminal to operate only in a partial bandwidth, not in a full bandwidth of a wideband CC, and a corresponding partial bandwidth is defined as a bandwidth part (BWP) for convenience. A BWP may be configured with consecutive RBs on a frequency axis and may correspond to one numerology (e.g., a subcarrier spacing, a CP length, a slot/a mini-slot duration).

Meanwhile, a base station may configure a plurality of BWPs even in one CC configured to a terminal. For example, a BWP occupying a relatively small frequency domain may be configured in a PDCCH monitoring slot, and a PDSCH indicated by a PDCCH may be scheduled in a greater BWP. Alternatively, when UEs are congested in a specific BWP, some terminals may be configured with other BWP for load balancing. Alternatively, considering frequency domain inter-cell interference cancellation between neighboring cells, etc., some middle spectrums of a full bandwidth may be excluded and BWPs on both edges may be configured in the same slot. In other words, a base station may configure at least one DL/UL BWP to a terminal associated with a wideband CC. A base station may activate at least one DL/UL BWP of configured DL/UL BWP(s) at a specific time (by L1 signaling or MAC CE(Control Element) or RRC signaling, etc.). In addition, a base station may indicate switching to other configured DL/UL BWP (by L1 signaling or MAC CE or RRC signaling, etc.). Alternatively, based on a timer, when a timer value is expired, it may be switched to a determined DL/UL BWP. Here, an activated DL/UL BWP is defined as an active DL/UL BWP. But, a configuration on a DL/UL BWP may not be received when a terminal performs an initial access procedure or before a RRC connection is set up, so a DL/UL BWP which is assumed by a terminal under these situations is defined as an initial active DL/UL BWP.

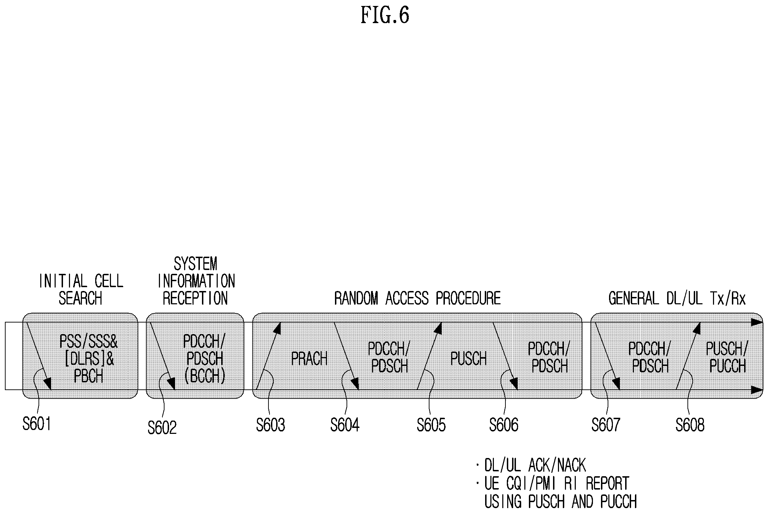

FIG. 6 illustrates physical channels used in a wireless communication system to which the present disclosure may be applied and a general signal transmission and reception method using them.

In a wireless communication system, a terminal receives information through a downlink from a base station and transmits information through an uplink to a base station. Information transmitted and received by a base station and a terminal includes data and a variety of control information and a variety of physical channels exist according to a type/a usage of information transmitted and received by them.

When a terminal is turned on or newly enters a cell, it performs an initial cell search including synchronization with a base station or the like (S601). For the initial cell search, a terminal may synchronize with a base station by receiving a primary synchronization signal (PSS) and a secondary synchronization signal (SSS) from a base station and obtain information such as a cell identifier (ID), etc. After that, a terminal may obtain broadcasting information in a cell by receiving a physical broadcast channel (PBCH) from a base station. Meanwhile, a terminal may check out a downlink channel state by receiving a downlink reference signal (DL RS) at an initial cell search stage.

A terminal which completed an initial cell search may obtain more detailed system information by receiving a physical downlink control channel (PDCCH) and a physical downlink shared channel (PDSCH) according to information carried in the PDCCH (S602).

Meanwhile, when a terminal accesses to a base station for the first time or does not have a radio resource for signal transmission, it may perform a random access (RACH) procedure to a base station (S603 to S606). For the random access procedure, a terminal may transmit a specific sequence as a preamble through a physical random access channel (PRACH) (S603 and S605) and may receive a response message for a preamble through a PDCCH and a corresponding PDSCH (S604 and S606). A contention based RACH may additionally perform a contention resolution procedure.

A terminal which performed the above-described procedure subsequently may perform PDCCH/PDSCH reception (S607) and PUSCH(Physical Uplink Shared Channel)/PUCCH(physical uplink control channel) transmission (S608) as a general uplink/downlink signal transmission procedure. In particular, a terminal receives downlink control information (DCI) through a PDCCH. Here, DCI includes control information such as resource allocation information for a terminal and a format varies depending on its purpose of use.

Meanwhile, control information which is transmitted by a terminal to a base station through an uplink or is received by a terminal from a base station includes a downlink/uplink ACK/NACK(Acknowledgement/Non-Acknowledgement) signal, a CQI(Channel Quality Indicator), a PMI(Precoding Matrix Indicator), a RI(Rank Indicator), etc. For a 3GPP LTE system, a terminal may transmit control information of the above-described CQI/PMI/RI, etc. through a PUSCH and/or a PUCCH.

Table 5 represents an example of a DCI format in an NR system.

[Table 5]

| DCI Format | Use |
|---|---|
| 0_0 | Scheduling of a PUSCH in one cell |
| 0_1 | Scheduling of one or multiple PUSCHs in one cell, or indication of cell group downlink feedback information to a UE |
| 0_2 | Scheduling of a PUSCH in one cell |
| 1_0 | Scheduling of a PDSCH in one DL cell |
| 1_1 | Scheduling of a PDSCH in one cell |
| 1_2 | Scheduling of a PDSCH in one cell |

In reference to Table 5, DCI formats 0_0, 0_1 and 0_2 may include resource information (e.g., UL/SUL(Supplementary UL), frequency resource allocation, time resource allocation, frequency hopping, etc.), information related to a transport block(TB) (e.g., MCS(Modulation and Coding Scheme), a NDI(New Data Indicator), a RV(Redundancy Version), etc.), information related to a HARQ(Hybrid - Automatic Repeat and request) (e.g., a process number, a DAI(Downlink Assignment Index), PDSCH-HARQ feedback timing, etc.), information related to multiple antennas (e.g., DMRS sequence initialization information, an antenna port, a CSI request, etc.), power control information (e.g., PUSCH power control, etc.) related to scheduling of a PUSCH and control information included in each DCI format may be pre-defined.

DCI format 0_0 is used for scheduling of a PUSCH in one cell. Information included in DCI format 0_0 is CRC (cyclic redundancy check) scrambled by a C-RNTI(Cell Radio Network Temporary Identifier) or a CS-RNTI(Configured Scheduling RNTI) or a MCS-C-RNTI(Modulation Coding Scheme Cell RNTI) and transmitted.

DCI format 0_1 is used to indicate scheduling of one or more PUSCHs or configure grant (CG) downlink feedback information to a terminal in one cell. Information included in DCI format 0_1 is CRC scrambled by a C-RNTI or a CS-RNTI or a SP-CSI-RNTI(Semi-Persistent CSI RNTI) or a MCS-C-RNTI and transmitted.

DCI format 0_2 is used for scheduling of a PUSCH in one cell. Information included in DCI format 0_2 is CRC scrambled by a C-RNTI or a CS-RNTI or a SP-CSI-RNTI or a MCS-C-RNTI and transmitted.

Next, DCI formats 1_0, 1_1 and 1_2 may include resource information (e.g., frequency resource allocation, time resource allocation, VRB(virtual resource block)-PRB(physical resource block) mapping, etc.), information related to a transport block(TB)(e.g., MCS, NDI, RV, etc.), information related to a HARQ (e.g., a process number, DAI, PDSCH-HARQ feedback timing, etc.), information related to multiple antennas (e.g., an antenna port, a TCI(transmission configuration indicator), a SRS(sounding reference signal) request, etc.), information related to a PUCCH (e.g., PUCCH power control, a PUCCH resource indicator, etc.) related to scheduling of a PDSCH and control information included in each DCI format may be pre-defined.

DCI format 1_0 is used for scheduling of a PDSCH in one DL cell. Information included in DCI format 1_0 is CRC scrambled by a C-RNTI or a CS-RNTI or a MCS-C-RNTI and transmitted.

DCI format 1_1 is used for scheduling of a PDSCH in one cell. Information included in DCI format 1_1 is CRC scrambled by a C-RNTI or a CS-RNTI or a MCS-C-RNTI and transmitted.

DCI format 1_2 is used for scheduling of a PDSCH in one cell. Information included in DCI format 1_2 is CRC scrambled by a C-RNTI or a CS-RNTI or a MCS-C-RNTI and transmitted.

MBMS (Multimedia Broadcast Multicast Service)

MBMS may include a single frequency network (SFN) scheme in which a plurality of base stations or a plurality of cells are synchronized to transmit the same data to a terminal, and a single cell point to multipoint (SC-PTM) scheme for broadcasting within the corresponding cell coverage through the PDCCH/PDSCH channel.

SFN scheme may be used to provide a broadcast service to a wide area (e.g., MBMS area) through resources allocated semi-statically in advance. A multicast broadcast single frequency network (MBSFN) provides logical channels, a multicast control channel (MCCH) and a multicast traffic channel (MTCH), and both of the MCCH and the MTCH are mapped to a transport channel, a multicast channel (MCH), and the MCH is mapped to a physical channel, a physical multicast channel (PMCH). That is, a plurality of base stations/cells may be synchronized to provide the same data to a terminal through the PMCH. One base station/cell may belong to a plurality of MBSFN areas. In addition, it may be required to configure the MBSFN subframe for the MBSFN service.

SC-PTM scheme may be mainly used to provide a broadcast service only within a cell coverage through dynamic resources. SC-PTM provides one logical channel, SC-MCCH (Single Cell Multicast Control Channel) and one or more logical channels SC-MTCH (Single Cell Multicast Traffic Channel). These logical channels (i.e., SC-MCCH and SC-MTCH) are mapped to the transport channel, DL-SCH, and the transport channel DL-SCH is mapped to the physical channel PDSCH. A PDSCH transmitting data corresponding to the SC-MCCH or SC-MTCH is scheduled through a PDCCH that is CRC scrambled with a group-radio network temporary identifier (G-RNTI). Here, a temporary mobile group identity (TMGI) corresponding to the MBMS service ID may be mapped one-to-one with a specific G-RNTI value. Accordingly, if the base station provides a plurality of MBMS services, a plurality of G-RNTI values may be allocated for SC-PTM transmission. One or more terminals may perform PDCCH monitoring using a specific G-RNTI to receive a specific MBMS service. Here, a discontinuous reception (DRX) on-duration period dedicated to SC-PTM may be configured for a specific MBMS service/specific G-RNTI. In this case, the corresponding terminals may wake up only for a specific on-duration period and perform PDCCH monitoring for the G-RNTI.

SPS (semi-persistent scheduling)

The base station may provide a specific terminal with SPS configuration dedicated to the terminal, and allocate one or more downlink SPS transmission resources that are repeated according to a configured period. DCI of terminal-dedicated (or terminal-specific) PDCCH may indicate activation (SPS activation) of a specific SPS configuration index. The terminal may perform downlink reception through the activated SPS transmission resource. Such SPS transmission resource may be used for initial HARQ transmission. The base station may allocate a retransmission resource of a specific SPS configuration index through DCI of PDCCH dedicated to a terminal. For example, when the terminal reports HARQ NACK for the SPS transmission resource, the base station may allocate the retransmission resource through DCI so that the terminal may receive downlink retransmission.

DCI of PDCCH dedicated to a terminal may indicate release or deactivation of a specific SPS configuration index. In this case, the corresponding terminal does not receive the SPS transmission resource for which release/deactivation is indicated.

CRC of DCI/PDCCH for activation/retransmission/deactivation for SPS configuration / resource may be scrambled by configured scheduling-radio network temporary identifier (CS-RNTI).

MBS (Multicast Broadcast Service)

In the NR-based wireless communication system, introduction of a new MBS-based DL broadcast or DL multicast transmission scheme, which is distinct from the aforementioned MBMS (e.g., MBSFN or SC-PTM), is being discussed. For example, the network side (e.g., base station/cell/TRP) may provide a point-to-multipoint (PTM) transmission scheme and a point-to-point (PTP) transmission scheme for DL broadcast or DL multicast transmission.

In the PTM transmission scheme for MBS, the base station may transmit a group common (or group-specific) PDCCH and a group common PDSCH to a plurality of terminals. A plurality of terminals may simultaneously receive the same group common PDCCH transmission and group common PDSCH transmission, and decode the same MBS data.

In the PTP transmission scheme for MBS, the base station may transmit a terminal-dedicated (or terminal-specific) PDCCH and a terminal-dedicated PDSCH to a specific terminal. The corresponding single terminal may receive the terminal-dedicated PDCCH and a terminal-dedicated PDSCH. When there are a plurality of terminals receiving the same MBS service, the base station may individually transmit the same MBS data to each of the plurality of terminals through different terminal-dedicated PDCCHs and terminal-dedicated PDSCHs.

In a PTM transmission method, a base station may transmit a plurality of group common PDSCHs to terminals. A base station may receive a terminal's HARQ-ACK for a group common PDSCH through a terminal-dedicated PUCCH resource.

When a terminal successfully decodes a transport block (TB) for a group common PDSCH, a terminal may transmit an ACK value as HARQ-ACK information. When a terminal fails to successfully decode a TB for a unicast PDSCH or a group common PDSCH, a terminal may transmit a NACK value as HARQ-ACK information. This HARQ-ACK transmission method may be referred to as an ACK/NACK-based HARQ-ACK method. ACK/NACK-based HARQ-ACK information may be generally transmitted through a terminal-dedicated PUCCH resource.

A NACK only-based HARQ-ACK method may be applied/configured for a group common PDSCH. For example, a terminal may not transmit a PUCCH in case of an ACK value (i.e., when it succeeds in decoding for a received PDSCH) and may transmit a PUCCH only in case of a NACK value (i.e., when it fails in decoding for a received PDSCH). NACK only-based HARQ-ACK information may be generally transmitted through a group common PUCCH resource. When multiple HARQ-ACKs are transmitted in a NACK only based HARQ-ACK method, if only an ACK value is included, HARQ-ACK information may not be transmitted and if even one NACK value is included, HARQ-ACK information may be transmitted.

In examples below, ACK/NACK-based HARQ-ACK may be referred to as HARQ-ACK information based on a first HARQ-ACK reporting mode and NACK only-based HARQ-ACK may be referred to as HARQ-ACK information based on a second HARQ-ACK reporting mode. In addition, a DCI format that is CRC-scrambled by a G-RNTI or a G-CS-RNTI may be referred to as a group common DCI format or a multicast DCI format. A group common/multicast DCI format may be also referred to as a group common/multicast PDCCH and a PDSCH scheduled thereby may be referred to as a group common/multicast PDSCH.

For example, a terminal may receive unicast traffic through a terminal-dedicated unicast PDSCH and may receive multicast traffic like a MBS through a group common multicast PDSCH. A terminal may transmit unicast HARQ-ACK for a unicast PDSCH and transmit multicast HARQ-ACK for a multicast PDSCH. If PUCCH transmission for unicast HARQ-ACK and PUCCH transmission for multicast HARQ-ACK are overlapped or should be transmitted in the same slot, there is a problem in which it is not clear how a terminal that may not transmit two PUCCHs simultaneously will transmit unicast HARQ-ACK and multicast HARQ-ACK. In particular, when multicast HARQ-ACK is configured as NACK only-based HARQ-ACK, there is a problem in which it is not clear how a plurality of HARQ-ACKs are transmitted under a situation where NACK only-based HARQ-ACK and ACK/NACK-based HARQ-ACK transmission are overlapped or should be transmitted to the same slot.

In the present disclosure, an ACK/NACK-based HARQ-ACK transmission method is not limited to HARQ-ACK for a unicast PDCCH/PDSCH, and as described above, an ACK/NACK-based HARQ-ACK transmission method may be also applied to HARQ-ACK for a multicast PDCCH/PDSCH.

In the present disclosure, for a case in which unicast HARQ-ACK information and multicast HARQ-ACK information (e.g., at least one of ACK/NACK-based HARQ-ACK information or NACK only-based HARQ-ACK information) collide in the same time unit, various examples of transmitting or receiving HARQ-ACK by applying at least one method of multiplexing, dropping, partial selection or separation are described.

For example, when NACK only-based HARQ-ACK and ACK/NACK-based HARQ-ACK transmission are overlapped or should be transmitted to the same slot, a plurality of HARQ-ACKs may be multiplexed into one PUCCH or may be transmitted by being divided into a plurality of PUCCHs.

For example, a terminal may be configured to transmit HARQ-ACK according to one of methods described below or transmit HARQ-ACK according to a combination of at least two of methods described below.

For example, a method of dropping HARQ-ACK with low priority (LP) and transmitting HARQ-ACK with high priority (HP) for all overlapping unicast HARQ-ACK and multicast HARQ-ACK may be applied/configured.

For example, the following options may be considered for overlapping unicast HARQ-ACK and multicast HARQ-ACK transmission.

Option 1: A terminal may preferentially transmit unicast HARQ-ACK and drop multicast HARQ-ACK.

Option 2: A base station may determine what will be transmitted and what will be dropped preferentially among unicast HARQ-ACK and multicast HARQ-ACK and configure/indicate it to a terminal.

Option 3: A priority indicated by the last received DCI for unicast HARQ-ACK and a priority indicated by the last received DCI for multicast HARQ-ACK may be compared to transmit unicast HARQ-ACK or multicast HARQ with high priority and drop the remaining HARQ-ACK.

Option 4: Among unicast HARQ-ACK and multicast HARQ-ACK, one with a small HARQ-ACK payload may be dropped and one with a large HARQ-ACK payload may be transmitted.

In addition, when ACK (only) is indicated for NACK only-based HARQ-ACK (i.e., when actual PUCCH transmission is not required), a terminal may determine that there is no collision with another HARQ-ACK or SR/CSI reporting, etc. Alternatively, even when ACK (only) is indicated for NACK only-based HARQ-ACK (i.e., when actual PUCCH transmission is not required), it may be determined that it may conflict with another HARQ-ACK or SR/CSI reporting, etc. by assuming it is virtually transmitted. In determining whether a terminal collides with another UCI, a base station may configure to a terminal whether NACK only-based HARQ-ACK will be considered to be actually transmitted or whether it will be considered to be virtually transmitted regardless of actual transmission.

In the present disclosure, when certain information is defined between a terminal and a base station, it may mean that a terminal and a base station know corresponding information without separate signaling between a terminal and a base station; when it is configured between a terminal and a base station, it may mean that corresponding information is transmitted/received through higher layer (e.g., RRC) signaling between a terminal and a base station; and when it is indicated between a terminal and a base station, it may mean that corresponding information is transmitted/received through lower layer (e.g., L1 (e.g., DCI/UCI), L2 (e.g., MAC-CE)) signaling.

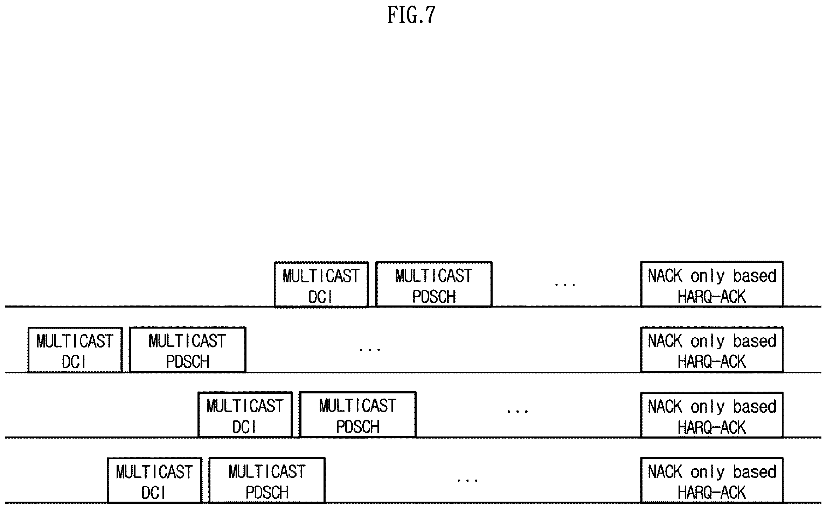

FIG. 7 exemplarily shows an overlapping situation of HARQ-ACK information in a NACK only-based report mode to which the present disclosure may be applied.

In an example of FIG. 7, DCI (or a PDCCH), a PDSCH scheduled thereby and HARQ-ACK therefor are indicated on the same line. In other words, in FIG. 7, four sets of associated/corresponding DCI (a PDCCH), a PDSCH and HARQ-ACK are shown. Although an example of FIG. 7 shows four HARQ-ACK for four DCI/PDSCHs, a scope of the present disclosure may be also applied to a plurality of HARQ-ACK for a plurality of DCI/PDSCHs. Although a horizontal axis is related to time, it is not intended to indicate an absolute or relative time position, and illustratively represents a situation in which HARQ-ACK corresponding to a different DCI/PDSCH overlaps (or is transmitted in the same slot).

In an example of FIG. 7, multicast DCI may be CRC-scrambled with a G-RNTI. In addition, multicast DCI may indicate a high priority (HP) or a low priority (LP). In addition, HARQ-ACK for multicast DCI/PDSCH represents a case of NACK only-based HARQ-ACK.

In an example of FIG. 7, a terminal may receive a plurality of multicast PDCCHs/PDSCHs scheduled with a different G-RNTI in a FDM or TDM scheme. Here, transmission of multicast HARQ-ACK information for a multicast PDCCH/PDSCH may be configured/determined to be performed in the same slot. All multicast HARQ-ACK may be configured as NACK only-based HARQ-ACK. In this case, a terminal may transmit one or a plurality of PUCCHs for a plurality of NACK only-based HARQ-ACK.

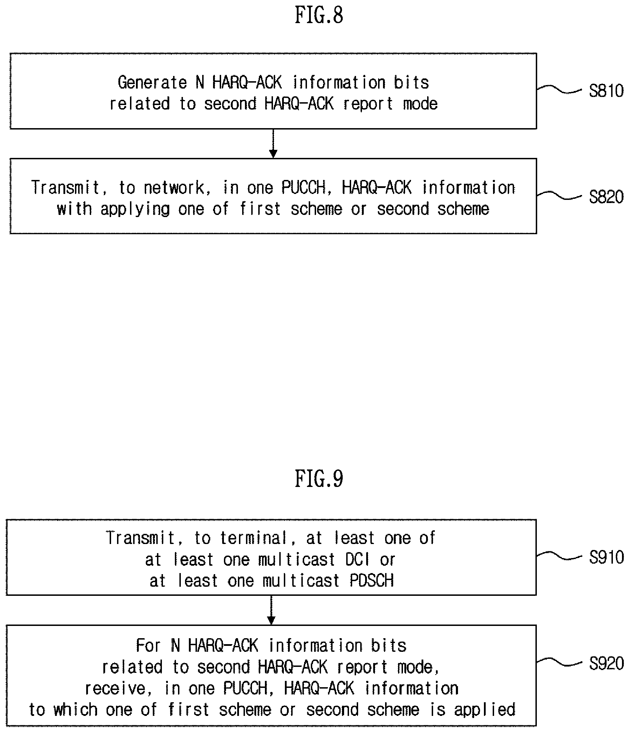

FIG. 8 is a diagram for describing a HARQ-ACK transmission method of a terminal according to an embodiment of the present disclosure.

In S810, a terminal may generate N HARQ-ACK information bits related to a second HARQ-ACK report mode.

N may be defined as an integer exceeding 1. In other words, a plurality of HARQ-ACK information bits related to a second HARQ-ACK report mode (i.e., a NACK only-based HARQ-ACK report mode) may be generated.

N HARQ-ACK information bits may be generated for at least one of at least one multicast DCI formats and/or at least one multicast PDSCHs received from a network. A multicast DCI format may be CRC-scrambled with a group-radio network temporary identifier (G-RNTI) or a configured scheduling(G-CS)-RNTI.

In S820, a terminal may transmit HARQ-ACK information to a network in one PUCCH by applying one of a first scheme or a second scheme.

Here, one of a first scheme or a second scheme may be applied based on a configuration by a network (or a base station).

For example, the second scheme may be applied to N=k according to a configuration of a base station, and the first scheme may be applied to N>k according to a configuration of the base station. For example, k may be 2, 3, or 4. According to this example, a second scheme may be applied to 2, 3, or 4 NACK only-based HARQ-ACK information bits, and a first scheme may be applied to more than 4 NACK only-based HARQ-ACK information bits.

A first scheme may refer to a scheme of transmitting HARQ-ACK information according to a first HARQ-ACK report mode (i.e., an ACK/NACK-based HARQ-ACK report mode). In other words, a first scheme may include transforming N HARQ-ACK information bits related to a second HARQ-ACK report mode into HARQ-ACK information bits of a first HARQ-ACK report mode and multiplexing them.

Here, for a HARQ-ACK information bit of a (transformed) first HARQ-ACK report mode, a PUCCH resource may be determined based on a PUCCH resource indicator (PRI) field included in a multicast DCI format. A corresponding multicast DCI format may be a last DCI format among at least one multicast DCI format. In other words, a HARQ-ACK information bit of a (transformed) first HARQ-ACK report mode may be transmitted through a PUCCH resource indicated by at least one DCI format related to a second HARQ-ACK report mode.

A second scheme may refer to a scheme of transmitting HARQ-ACK information by selecting one PUCCH resource from a set of PUCCH resources based on a value of N HARQ-ACK information bits. For example, a set of PUCCH resources may include $2^N-1$ PUCCH resource candidates. In addition, each PUCCH resource candidate may correspond to a different combination of values of N HARQ-ACK information bits. If a value of a HARQ-ACK information bit is 0, it corresponds to a case in which a terminal does not rightly decode a transport block (TB), and if that value is 1, it corresponds to a case in which a terminal rightly decodes a TB.

FIG. 9 is a diagram for describing a HARQ-ACK reception method of a base station according to an embodiment of the present disclosure.

In S910, a base station may transmit at least one of at least one multicast DCI or at least one multicast PDSCH to a terminal.

In S920, a base station may receive HARQ-ACK information to which one of a first scheme or a second scheme is applied from a terminal in one PUCCH for N HARQ-ACK information bits related to a second HARQ-ACK report mode generated based on at least one multicast DCI/PDSCH.

In an example of FIG. 9, examples described by referring to FIG. 8 may be applied equally to N HARQ-ACK information bits related to a second HARQ-ACK report mode, and a first scheme and a second scheme, so an overlapping description is omitted.

A variety of examples in which multiple HARQ-ACK information bits related to a second HARQ-ACK report mode (i.e., a NACK only-based HARQ-ACK report mode) including the above-described contents are transmitted on one PUCCH, which may be applied to an example of FIG. 8 and FIG. 9, will be described later.

Embodiment 1

This embodiment relates to a method in which a terminal configures a resource for NACK only-based HARQ-ACK transmission/reception and uses it to transmit/receive HARQ-ACK information. Here, a resource for HARQ-ACK transmission/reception may correspond to at least one of a PUCCH resource, a PUCCH resource block (RB), or a PUCCH sequence (e.g., a cyclic shift (CS) index).

It may be assumed that PUCCH transmission of NACK only-based HARQ-ACK collides with PUCCH transmission of at least one another NACK only-based HARQ-ACK or must be transmitted in the same slot. A terminal capable of transmitting two PUCCHs simultaneously may transmit at least two NACK only-based HARQ-ACK simultaneously in a different PUCCH. For a terminal incapable of transmitting a plurality of PUCCHs simultaneously, or if more than two NACK only-based HARQ-ACK collides, the following examples may be applied so that a terminal multiplexes and transmits NACK only-based HARQ-ACK.

A base station may configure $2^N$-1 PUCCH resources to support N HARQ-ACK transmissions for N (e.g., N is an integer exceeding 1) group common PDSCH transmissions to be multiplexed in one same UL slot. Here, $2^N$-1 PUCCH resources may be configured separately as a PUCCH resource for a NACK only-based HARQ-ACK report mode (e.g., separately from a PUCCH resource for an ACK/NACK-based HARQ-ACK report mode).

Here, a group common PDSCH may correspond to a group common SPS PDSCH or a group common SPS PDSCH scheduled by DCI. In addition, a HARQ-ACK information bit may be generated for a multicast PDSCH scheduled by DCI indicating activation/deactivation of SPS transmission and/or multicast DCI.

In addition, it is assumed that among N group common PDSCHs, at least one PDSCH is scheduled by DCI. This DCI may include a PUCCH resource indicator (PRI).

For example, for N=k (e.g., k=2), based on a PUCCH resource indicated by a PRI, up to $2^N$-1 (e.g., up to 3) PUCCH resources including a corresponding reference PUCCH resource may be defined/configured.

For N>k, up to $2^N$-1 PUCCH resources may be defined/configured by combining a PUCCH resource indicated by a PRI and a predetermined PUCCH resource. Here, a predetermined PUCCH resource may be a PUCCH resource corresponding to a value of PRI+1, or may be a PUCCH resource defined/configured for an adjacent RB (or PRB) of a RB (or a PRB) configured for a PUCCH resource indicated by a PRI.

For example, $2^N$-1 PUCCH resources may be distinguished based on a different time-frequency resource, or may be distinguished based on a value (e.g., 0, 3, 6) of a different cyclic shift applied to a different PUCCH sequence or PUCCH sequence.

For example, PUCCH-config for NACK-only HARQ-ACK (i.e., a set of higher layer parameters) may be configured. For clarity of a description, an example described later assumes that three HARQ-ACK (i.e., NACK only HARQ-ACK information bits) for three group common PDSCHs must be multiplexed and transmitted in the same UL slot (i.e., N=3). In this case, HARQ-ACK information may be transmitted through one PUCCH according to a combination of values of three HARQ-ACK information bits (i.e., a HARQ-ACK status).

For N=3, it may be assumed that the maximum number of PUCCH resources per PUCCH resource set is 8(=$2^N$). Among these, it may be assumed that the maximum number of PUCCH resources (or PUCCH sequences) for a combination of NACK only HARQ-ACK is 7(=$2^N$-1). In addition, it may be assumed that a PUCCH resource index indicated by a PRI of last received DCI (e.g., last received DCI of group common (or multicast) DCI) is 4.

For N=3, when three HARQ-ACK is multiplexed in the same UL slot, except when all three HARQ-ACK is ACK, it may be assumed that a combination of NACK-only HARQ-ACK information bits (i.e., a HARQ-ACK status) is 7(=$2^N$-1) cases as in the following table. In the following table, N refers to NACK or 0, and A refers to ACK or 1.

[Table 6]

| HARQ-ACK Status Index | HARQ-ACK for a first PDSCH | HARQ-ACK for a second PDSCH | HARQ-ACK for a third PDSCH |
|---|---|---|---|
| 1 | N | N | N |

(continued)

| HARQ-ACK Status Index | HARQ-ACK for a first PDSCH | HARQ-ACK for a second PDSCH | HARQ-ACK for a third PDSCH |
|---|---|---|---|
| 2 | A | N | N |
| 3 | N | A | N |
| 4 | N | N | A |
| 5 | A | A | N |
| 6 | N | A | A |
| 7 | A | N | A |

Based on the above-described assumption, specific examples for a scheme of selecting one transmission resource from a set of transmission resources (e.g., PUCCH resources, RBs, sequences, CS indexes, etc.) based on a value of N HARQ-ACK information bits are described below.

Embodiment 1-1

Based on a PUCCH resource indicated by a PRI of last received group common DCI, $2^N$-1 adjacent PRIs may be selected. One of $2^N$-1 HARQ-ACK statuses may be selected according to a decoding result for N group common PDSCHs. Multiplexed HARQ-ACK may be transmitted by using a PUCCH resource according to a PRI corresponding to a HARQ-ACK status selected among $2^N$-1 PRIs.

For example, if a PRI value indicated by DCI is 4, 7 adjacent PRIs including 4 may be selected. In other words, 7 PRIs for PRI=4, 5, 6, 7, 8, 9, 10 may be selected.

If the maximum value of a PRI is 8, PRI=4, 5, 6, 7, 8, 1, 2 may be selected by considering wrap around.

It is assumed that a value of a HARQ-ACK information bit for a first PDSCH is 1 (or ACK), a value of a HARQ-ACK information bit for a first PDSCH is 0 (or NACK), and a value of a HARQ-ACK information bit for a first PDSCH is 0 (or NACK). In an example of Table 6, it corresponds to HARQ-ACK status index 2, and starting from PRI 4, a PUCCH resource corresponding to PRI=5, a second PRI, may be selected. HARQ-ACK information transmitted/received through a selected PUCCH resource may indicate whether each PDSCH (or a corresponding TB) corresponding to HARQ-ACK status index 2 is successfully decoded.

If all N group common PDSCHs are a SPS PDSCH, a PRI indicated by DCI may not exist. In this case, a PRI of a PUCCH resource of a group common PDSCH corresponding to the lowest SPS configuration index (SPS Config index), the highest SPS configuration index, or a higher priority among N PDSCHs may be determined as a reference resource. PUCCH resources corresponding to a total of $2^N$-1 PRIs including subsequent PRIs including a PRI corresponding to a reference resource may be selected as a PUCCH resource set.

As above, a one-to-one mapping relationship may be defined/configured between $2^N$-1 HARQ-ACK statuses and $2^N$-1 PUCCH resources (or PRIs) included in one PUCCH resource set. For example, for N=2, 3, or 4, a mapping relationship between a PUCCH resource and a combination of HARQ-ACK information bits (i.e., a HARQ-ACK status) may be defined/configured in advance as in the following table. In an example of Table 7, a transmission resource set may correspond to sets of PUCCH resources (or PRIs) in examples described above, or may be defined/configured/determined by a combination of at least one of a PUCCH resource, a PUCCH RB, a PUCH sequence, or a CS index in examples described later.

[Table 7]

| Index of HARQ-ACK Status (a combination of HARQ-ACK information bits) | N=2 | N=3 | N=4 | Resource index in transmission resource |
|---|---|---|---|---|
| 1 | N, N | N, N, N | N, N, N, N | First resource |
| 2 | A, N | A, N, N | A, N, N, N | Second resource |
| 3 | N, A | N, A, N | N, A, N, N | Third resource |
| 4 | | A, A, N | A, A, N, N | Fourth resource |
| 5 | | N, N, A | N, N, A, N | Fifth resource |

(continued)

| Index of HARQ-ACK Status (a combination of HARQ-ACK information bits) | N=2 | N=3 | N=4 | Resource index in transmission resource |
|---|---|---|---|---|
| 6 | | A, N, A | A, N, A, N | Sixth resource |
| 7 | | N, A, A | N, A, A, N | Seventh resource |
| 8 | | | A, A, A, N | Eighth resource |
| 9 | | | N, N, N, A | Ninth resource |
| 10 | | | A, N, N, A | Tenth resource |
| 11 | | | N, A, N, A | Eleventh resource |
| 12 | | | A, A, N, A | Twelfth resource |
| 13 | | | N, N, A, A | Thirteenth resource |
| 14 | | | A, N, A, A | Fourteenth resource |
| 15 | | | N, A, A, A | Fifteenth resource |

Embodiment 1-2 Based on a RB corresponding to a PUCCH resource indicated by a PRI of last received group common DCI, $2^N$-1 adjacent RBs may be selected. One of $2^N$-1 HARQ-ACK statuses may be selected according to a decoding result for N group common PDSCHs. Multiplexed HARQ-ACK may be transmitted by using a PUCCH resource according to a RB corresponding to a HARQ-ACK status selected among $2^N$-1 RBs.

For example, if a PRI value indicated by DCI is 4, 7 adjacent RBs including a RB corresponding to a PUCCH resource indicated by PRI=4 may be selected. In other words, if a RB (or starting PRB) index configured for a PUCCH resource indicated by PRI=4 is RB#4, 7 RBs of RB#5, RB#6, RB#7, RB#8, RB#9, RB#10 may be selected.

If an additional RB must be selected after the maximum value is selected in ascending order of RB indexes within an UL BWP, the required number of RBs may be additionally selected, starting from the lowest RB of a corresponding UL BWP.

It is assumed that a value of a HARQ-ACK information bit for a first PDSCH is 1 (or ACK), a value of a HARQ-ACK information bit for a first PDSCH is 0 (or NACK), and a value of a HARQ-ACK information bit for a first PDSCH is 0 (or NACK). In an example of Table 6, it corresponds to HARQ-ACK status index 2, and starting from RB#4, a RB index corresponding to a PUCCH resource indicated by PRI=4, a PUCCH resource corresponding to RB#5, a second RB, may be selected. HARQ-ACK information transmitted/received through a selected PUCCH resource may indicate whether each PDSCH (or a corresponding TB) corresponding to HARQ-ACK status index 2 is successfully decoded.

If all N group common PDSCHs are a SPS PDSCH, a PRI indicated by DCI may not exist. In this case, a RB corresponding to a PUCCH resource of a group common PDSCH corresponding to the lowest SPS configuration index (SPS Config index), the highest SPS configuration index, or a higher priority among N PDSCHs may be determined as a reference resource. PUCCH resources corresponding to a total of $2^N$-1 RBs including subsequent RBs including a RB corresponding to a reference resource may be selected as a PUCCH resource set.

Embodiment 1-3

Based on a PUCCH sequence of a PUCCH resource indicated by a PRI of last received group common DCI, $2^N$-1 adjacent PUCCH sequences may be selected. Here, an adjacent PUCCH sequence may be based on a PRI. One of $2^N$-1 HARQ-ACK statuses may be selected according to a decoding result for N group common PDSCHs. Multiplexed HARQ-ACK may be transmitted by using a PUCCH resource according to a PUCCH sequence corresponding to a HARQ-ACK status selected among $2^N$-1 PUCCH sequences.

For example, if a PRI value indicated by DCI is 4, a PUCCH sequence of a PUCCH resource indicated by PRI=4 may be determined as a reference resource, and including a cyclic shift (CS) index of a reference PUCCH sequence, 7 PUCCH sequences corresponding to 7 adjacent CS indexes may be selected. In other words, if a CS index of a PUCCH sequence of a PUCCH resource indicated by PRI=4 is CS#4, a PUCCH sequence based on 7 CS indexes of CS#5, CS#6, CS#7, CS#8, CS#9, CS#10 may be selected. It corresponds to a case in which a PUCCH resource set may be configured with PUCCH sequences applicable to one PUCCH resource.

If the number of candidates for a CS index resource applicable to one PUCCH resource is X (e.g., X=4), 7 CS indexes may not be selected for one PUCCH resource, and only up to 4 CS indexes may be selected. The remaining three CS indexes may be selected from a CS index resource candidate applied to a PUCCH sequence for another PUCCH resource (e.g., an adjacent PUCCH resource based on a PRI). For example, 4 PUCCH sequences corresponding to 4 CS resource indexes of a PUCCH resource corresponding to PRI=4 are selected and 3 PUCCH sequences corresponding to 3 CS resource indexes of an adjacent PUCCH resource corresponding to PRI=5 are selected, so a transmission resource set may include 7 PUCCH sequences.

For example, X=4 PUCCH sequences for one PUCCH resource may be PUCCH sequences corresponding to CS index 0, 3, 6, and 9. For example, four CS indexes may be selected in the order of 0, 6, 3, and 9.

It is assumed that a value of a HARQ-ACK information bit for a first PDSCH is 1 (or ACK), a value of a HARQ-ACK information bit for a first PDSCH is 0 (or NACK), and a value of a HARQ-ACK information bit for a first PDSCH is 0 (or NACK). It may correspond to HARQ-ACK status index 2 in an example of Table 6. Four PUCCH sequences for a PUCCH resource corresponding to PRI=4 (i.e., CS index 0, 6, 3, 9) and three PUCCH sequences for a PUCCH resource corresponding to PRI=5 (i.e., CS index 0, 6, 3) may be included in a transmission resource set. Resource index 2 in a transmission resource set corresponding to HARQ-ACK status index 2 may be selected as a PUCCH sequence applying CS index 6 to a PUCCH resource corresponding to PRI=4. HARQ-ACK information transmitted/received through a PUCCH resource based on a selected PUCCH sequence may indicate whether each PDSCH (or a corresponding TB) corresponding to HARQ-ACK status index 2 is successfully decoded.

If all N group common PDSCHs are a SPS PDSCH, a PRI indicated by DCI may not exist. In this case, a PUCCH sequence corresponding to a PUCCH resource of a group common PDSCH corresponding to the lowest SPS configuration index (SPS Config index), the highest SPS configuration index, or a higher priority among N PDSCHs may be determined as a reference resource. PUCCH resources corresponding to a total of $2^N$-1 PUCCH sequences including subsequent PUCCH sequences (or CS resource indexes) based on a PRI including a PUCCH sequence (i.e., a CS resource index) corresponding to a reference resource may be selected as a PUCCH resource set.

Embodiment 1-4

Based on a PUCCH sequence of a PUCCH resource indicated by a PRI of last received group common DCI, $2^N$-1 adjacent PUCCH sequences may be selected. Here, an adjacent PUCCH sequence may be based on a RB. One of $2^N$-1 HARQ-ACK statuses may be selected according to a decoding result for N group common PDSCHs. Multiplexed HARQ-ACK may be transmitted by using a PUCCH resource according to a PUCCH sequence corresponding to a HARQ-ACK status selected among $2^N$-1 PUCCH sequences.

When a PUCCH resource set is configured with PUCCH sequences applicable to one PUCCH resource, a PUCCH resource set including adjacent PUCCH sequences (or CS resource indexes) may be configured in the same manner as in Embodiment 1-3.

If the number of candidates for a CS index resource applicable to one PUCCH resource is X (e.g., X=4), 7 CS indexes may not be selected for one PUCCH resource, and only up to 4 CS indexes may be selected. The remaining three CS indexes may be selected from a CS index resource candidate applied to a PUCCH sequence for another PUCCH resource (e.g., an adjacent PUCCH resource based on a RB). For example, 4 PUCCH sequences corresponding to 4 CS resource indexes of a PUCCH resource corresponding to PRI=4 may be selected first. When RB#n is configured for a PUCCH resource corresponding to PRI=4, three PUCCH sequences corresponding to three CS resource indexes of a PUCCH resource corresponding to RB#n+1 may be additionally selected. Accordingly, a transmission resource set may include 7 PUCCH sequences.

For example, X=4 PUCCH sequences for one PUCCH resource may be PUCCH sequences corresponding to CS index 0, 3, 6, and 9. For example, four CS indexes may be selected in the order of 0, 6, 3, and 9.

It is assumed that a value of a HARQ-ACK information bit for a first PDSCH is 1 (or ACK), a value of a HARQ-ACK information bit for a first PDSCH is 0 (or NACK), and a value of a HARQ-ACK information bit for a first PDSCH is 0 (or NACK). It may correspond to HARQ-ACK status index 2 in an example of Table 6. Four PUCCH sequences for a PUCCH resource corresponding to PRI=4 and RB#n (i.e., CS index 0, 6, 3, 9), or three PUCCH sequences for a PUCCH resource corresponding to RB#n+1 (i.e., CS index 0, 6, 3) may be included in a transmission resource set. Resource index 2 in a transmission resource set corresponding to HARQ-ACK status index 2 may be selected as a PUCCH sequence applying CS index 6 to a PUCCH resource corresponding to PRI=4. HARQ-ACK information transmitted/received through a PUCCH resource based on a selected PUCCH sequence may indicate whether each PDSCH (or a corresponding TB) corresponding to HARQ-ACK status index 2 is successfully decoded.

If all N group common PDSCHs are a SPS PDSCH, a PRI indicated by DCI may not exist. In this case, a PUCCH sequence corresponding to a PUCCH resource of a group common PDSCH corresponding to the lowest SPS configuration index (SPS Config index), the highest SPS configuration index, or a higher priority among N PDSCHs may be determined as a reference resource. PUCCH resources corresponding to a total of $2^N$-1 PUCCH sequences including subsequent PUCCH sequences (or CS resource indexes) based on a RB including a PUCCH sequence (i.e., a CS resource index) corresponding to a reference resource may be selected as a PUCCH resource set.

In Embodiment 1 and detailed embodiments, when all of N group common PDSCHs are a SPS PDSCH and a PRI indicated by DCI does not exist, a reference resource may be determined based on sps-PUCCH-AN, which is configuration information of a PUCCH resource for HARQ-ACK for SPS transmission, and sps-PUCCH-AN-List corresponding to a list thereof. For example, a PUCCH resource listed first or last in sps-PUCCH-AN-List, or a PUCCH resource corresponding to the lowest or highest RB may be determined as a reference resource. Accordingly, adj acent PUCCH resources including a PUCCH resource corresponding to a reference resource may be included in a PUCCH resource set.

Embodiment 2

A terminal may apply a scheme described above (i.e., Embodiment 1 or detailed examples thereof) or a scheme described later (e.g., Embodiment 2 or detailed examples thereof) according to a configuration of a base station to N NACK only-based HARQ-ACK transmitted to the same UL slot.

A configuration of a base station may be related to a predetermined threshold. A predetermined threshold may be related to the above-mentioned N value (i.e., the number of HARQ-ACK information bits based on a NACK only HARQ-ACK report mode to be multiplexed). For example, if a N value is equal to or less than k (i.e., a threshold), Embodiment 1 may be applied, and if a N value exceeds k, Embodiment 2 may be applied. For example, k may be 2, 3, or 4. For example, when a N value is equal to or less than 4, a scheme of Embodiment 1 for selecting one PUCCH resource from a set of PUCCH resources based on a value of N HARQ-ACK information bits (i.e., a HARQ-ACK status) may be applied. If a N value exceeds 4, a scheme of Embodiment 2 for dropping part of a NACK only-based HARQ-ACK information bit, or transforming it to an ACK/NACK-based HARQ-ACK information bit to transmit multiplexed HARQ-ACK information as described later may be applied.

A value of this threshold k may be configured by a base station to a terminal, or may be predefined as a fixed value between a base station and a terminal. In other words, when a configuration of a base station is provided, even if what a value of k is is not separately configured/indicated to a terminal, Embodiment 1 may be applied to N values equal to or less than a fixed k.

In addition, when a base station configures a threshold value, a base station may configure a threshold per G-RNTI, PUCCH-config, common frequency resource (CFR), UL BWP, or service cell.

Embodiment 2-1

Among N NACK only-based HARQ-ACK information bits, HARQ-ACK information bit(s) exceeding k thresholds (or equal to or greater than k) may be dropped, and HARQ information bit(s) below k (or less than or equal to k) may be multiplexed.

For example, a low-priority HARQ-ACK information bit may be dropped preferentially over a high-priority HARQ-ACK information bit. In other words, only HARQ-ACK information bits equal to the number of high-priority thresholds may be multiplexed.

Additionally or alternatively, HARQ-ACK information bit(s) for a recently received PDSCH may be dropped with priority over HARQ-ACK information bit(s) for a previously received PDSCH. In other words, only HARQ-ACK information bits for previously received group common PDSCHs equal to the number of thresholds may be multiplexed.

Additionally or alternatively, HARQ-ACK information bit(s) with a large remaining Packet Data Budget (PDB) may be dropped with priority over HARQ-ACK information bit(s) with a small remaining PDB. In other words, only HARQ-ACK for as many TBs as the number of thresholds with a small remaining PDB may be multiplexed.

Additionally or alternatively, a SPS PDSCH that is not scheduled with DCI may be dropped preferentially. Here, among SPS PDSCHs, a SPS PDSCH for a higher SPS-config index may be dropped preferentially. Accordingly, a SPS PDSCH for a lower SPS-config index may be multiplexed preferentially.

Additionally or alternatively, a group common PDSCH scheduled with DCI may be dropped preferentially. Afterwards, among SPS PDSCHs, a SPS PDSCH for a higher SPS-config index may be dropped preferentially. Accordingly, a SPS PDSCH for a lower SPS-config index may be multiplexed preferentially.

Embodiment 2-2

If a value of N exceeds (or is equal to or greater than) a value of threshold k, all NACK only-based HARQ-ACK information bits may be transformed into ACK/NACK-based HARQ-ACK information bits to transmit/receive HARQ-ACK multiplexed by selecting one PUCCH resource. In other words, for N<=k, a scheme of selecting one PUCCH resource from a set of PUCCH resources based on a value of N HARQ-ACK information bits (i.e., a HARQ-ACK status) according to Embodiment 1 may be applied.

Here, a PUCCH resource selected for transmission of (transformed) HARQ-ACK information bits may correspond to PUCCH resource/transmission indicated by a PRI of last received DCI.

Alternatively, $2^N$ transmission resources may be selected by applying a scheme of selecting $2^{N-1}$ transmission resources described in Embodiment 1 (e.g., based on at least one combination of a PRI-based PUCCH resource, a PUCCH RB, or a PUCCH sequence). Among $2^N$ transmission resources, one transmission resource (e.g., a PUCCH resource/RB/sequence) may be defined/configured as a PUCCH resource/transmission for a case of N>k (i.e., selected for transmission of (transformed) HARQ-ACK information bits).

Alternatively, a PUCCH resource selected for transmission of (transformed) HARQ-ACK information bits may be selected according to PUCCH-config for unicast, or PUCCH-config for ACK/NACK-based HARQ-ACK for multicast. If PUCCH-config for multicast is not configured, a PUCCH resource may be selected according to a configuration of PUCCH-config for unicast.

If all N group common PDSCHs are a SPS PDSCH, a PRI indicated by DCI may not exist. In this case, a PUCCH resource of a group common PDSCH corresponding to the lowest SPS configuration index (SPS Config index), the highest SPS configuration index, or a higher priority among N PDSCHs may be selected for transmission of (transformed) HARQ-ACK information bits.

A base station may configure the above-described N value or k value as a specific value. Here, a N or k value may be configured to be adjusted according to (or in consideration of) a RSRP measurement value of a serving cell measured by a terminal.

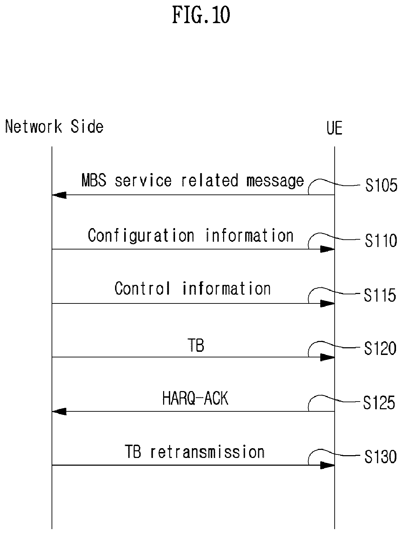

FIG. 10 is a diagram for illustrating a signaling procedure of the network side and the terminal according to an embodiment of the present disclosure.

FIG. 10 shows an example of signaling between a network side and a terminal (UE) in a situation to which the examples (e.g., embodiments 1, 2, 3, 4, 5, 6, 7 or its detailed examples, and a combination of one or more thereof) of the present disclosure described above may be applied.

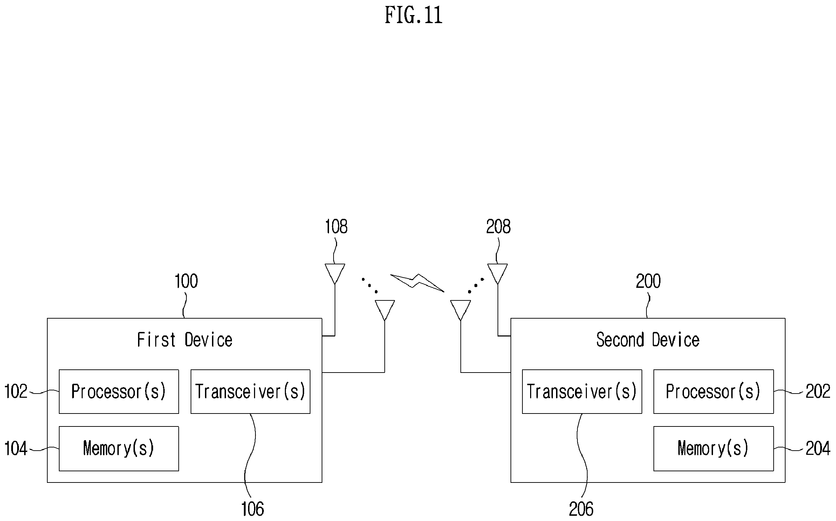

Here, the UE/network side is exemplary, and may be replaced with various devices to be described with reference to FIG. 11. FIG. 10 is for convenience of description, and does not limit the scope of the present disclosure. Also, some step(s) shown in FIG. 10 may be omitted depending on circumstances and/or settings. In addition, in the operation of the network side/UE of FIG. 10, the above-described uplink transmission/reception operation and the like may be referred to or used.

In the following description, the network side may be one base station including a plurality of TRPs, or may be one cell including a plurality of TRPs. Alternatively, the network side may include a plurality of remote radio heads (RRHs)/remote radio units (RRUs). As an example, an ideal/non-ideal backhaul may be configured between TRP 1 and TRP 2 included in the network side. In addition, although the following description is based on a plurality of TRPs, such description may be equivalently extended and applied to transmission through a plurality of panels/cells, and may also be extended and applied to transmission through a plurality of RRHs/RRUs.

In addition, although described with reference to "TRP" in the following description, "TRP" may be replaced with and applied to a panel, an antenna array, a cell (e.g., a macro cell/small cell/pico cell, etc.), TP (transmission point), base station (base station, gNB, etc.) as described above. As described above, the TRP may be distinguished according to information (e.g., CORESET index, ID) on the CORESET group (or CORESET pool).

As an example, when one UE is configured to perform transmission and reception with a plurality of TRPs (or cells), this may mean that a plurality of CORESET groups (or CORESET pools) are configured for the one UE. The configuration of such CORESET group (or CORESET pool) may be performed through higher layer signaling (e.g., RRC signaling, etc.).

In addition, the base station may mean a generic term for an object that transmits/receives data to and from the UE. For example, the base station may be a concept including one or more TPs (Transmission Points), one or more TRPs (Transmission and Reception Points), or the like. In addition, the TP and/or TRP may include a panel, a transmission and reception unit, and the like of the base station.

The UE may enter the RRC_CONNECTED mode, and may report a message indicating one or more interested MBS services to the network side (S105).

Here, the UE may transmit the message to the network side through at least one of UCI, MAC CE (Control Element), or RRC message. In addition, the MBS service of interest in the message may mean one of TMGI and G-RNTI listed in a DL message received from the network side.

For example, the DL message may be a service availability message listing TMGI #1, TMGI #3, TMGI #5, and TMGI #10. When the UE is interested in TMGI #5, the UE may indicate the order of TMGI #5 in the message. That is, the terminal may report '3' to the network side.

As an additional example, the DL message may be a service availability message listing G-RNTI #1, G-RNTI #3, G-RNTI #5, and G-RNTI #10. When the UE is interested in G-RNTI #10, the UE may indicate the order of G-RNTI #10 in the message. That is, the UE may report '4' to the network side.

For example, the operation of the UE (100 or 200 in FIG. 11) of the above-described step S105 transmitting the message to the network side (200 or 100 in FIG. 11) may be implemented by the device of FIG. 11 to be described below. For example, referring to FIG. 11, the one or more processors 102 may control one or more transceivers 106 and/or one or more memories 104, etc. to transmit the message, and the one or more transceivers 106 may transmit the message to the network side.

Upon receiving the message, the network side may transmit configuration information to the UE by an RRC message (S 110).

For example, the configuration information may include CFR (common frequency resource) configuration information, one or more group common PDSCH configuration information including TCI states for one or more G-RNTI values, search space configuration information including TCI states for one or more G-RNTI values.

Here, the RRC message may be a group common message transmitted through a PTM MCCH (Multicast Control Channel) or a UE-dedicated message transmitted through a UE-specific DCCH (Dedicated Control Channel).

In addition, CFR may include DL CFR and UL CFR. For example, one DL CFR may provide group common PDCCH and group common PDSCH transmission resources for MBS transmission or reception. One UL CFR may provide HARQ-ACK PUCCH resources for group common PDSCH reception. One CFR may be one MBS-specific BWP or one UE-specific BWP. Additionally or alternatively, one or a plurality of CFRs may be configured in one UE-specific BWP. One CFR may have a linkage relationship with one UE-specific BWP.

The terminal may be configured with at least a G-RNTI value for each MBS CFR or each serving cell. GC-CS-RNTI may be configured/used for activation, retransmission or release of one or more group common SPS configurations.

When the UE is not configured with GC-CS-RNTI for CFR or serving cell, and CS-RNTI is configured for CFR or serving cell, the UE may use CS-RNTI for activating, retransmitting, or releasing of one or more group common SPS configurations.

The network side may associate one GC-CS-RNTI value with a TMGI list or a G-RNTI list. In this case, the network side may provide a TMGI list or a G-RNTI list associated with the GC-CS-RNTI value.

In addition, configuration information of each PDSCH (e.g., 'PDSCH-config') may be configured as shown in Table 8 as a minimum information element for multicast and/or broadcast.

[Table 8]

```
PDSCH-Config ::= SEQUENCE {
dataScramblingIdentityPDSCH INTEGER (0..1023) OPTIONAL, -- Need S
dmrs-DownlinkForPDSCH-MappingTypeA SetupRelease { DMRS-DownlinkConfig }
OPTIONAL, -- Need M
dmrs-DownlinkForPDSCH-MappingTypeB SetupRelease { DMRS-DownlinkConfig }
OPTIONAL, -- Need M
tci-StatesToAddModList SEQUENCE (SIZE(1..maxNrofTCI-States)) OF TCI-State
OPTIONAL, -- Need N
tci-StatesToReleaseList SEQUENCE (SIZE(1..maxNrofTCI-States)) OF TCI-StateId
OPTIONAL, -- Need N
vrb-ToPRB-Interleaver ENUMERATED {n2, n4} OPTIONAL, -- Need S
resourceAllocation ENUMERATED { resourceAllocationType0, resourceAllocationType1, dynamic Switch},
pdsch-TimeDomainAllocationList SetupRelease { PDSCH-TimeDomainResourceAllocationList } OPTIONAL, --
Need M
pdsch-AggregationFactor ENUMERATED { n2, n4, n8 } OPTIONAL, -- Need S
rateMatchPatternToAddModList SEQUENCE (SIZE (1..maxNrofRateMatchPatterns)) OF
RateMatchPattern OPTIONAL, -- Need N
rateMatchPatternToReleaseList SEQUENCE (SIZE (1..maxNrofRateMatchPatterns)) OF
RateMatchPatternId OPTIONAL, -- Need N
rateMatchPatternGroup1 RateMatchPatternGroup OPTIONAL, -- Need R
rateMatchPatternGroup2 RateMatchPatternGroup OPTIONAL, -- Need R
rbg-Size ENUMERATED {config1, config2},
mcs-Table ENUMERATED {qam256, qam64LowSE} OPTIONAL, -- Need S
maxNrofCodeWordsScheduledByDCI ENUMERATED {n1, n2}
... }
```

Meanwhile, when a specific PUCCH resource is configured as NACK only based HARQ-ACK, a base station may provide a terminal with a RRC information element (IE) for a specific PUCCH resource formed in the following manner. Scheme 1A: A terminal may distinguish between NACK only and ACK/NACK based on a different PRI and PUCCH resource ID.

Scheme 1A-1: Each PUCCH resource may include indication information indicating whether to configure NACK only-based HARQ-ACK. For example, a PUCCH resource, a RRC IE for a specific PUCCH resource, may include at least one of an IE for a PUCCH resource ID, or an indication IE for NACK only.

Scheme 1A-2: A RRC IE for a PUCCH resource set including a specific PUCCH resource may include a PUCCH resource for NACK only (e.g., 4 to 7 PUCCH resources are configured as NACK only-based HARQ-ACK), and a PUCCH resource IE for ACK/NACK (e.g., 0 to 3 PUCCH resources are configured as ACK/NACK-based HARQ-ACK). All of these IEs may be mapped to the same PUCCH resource set ID. In this case, within the same PUCCH resource set, based on a different PUCCH resource ID, a separate PUCCH resource may be configured for ACK/NACK and NACK only.

Scheme 1B: NACK only and ACK/NACK may be distinguished based on a separate indicator in DCI.

Scheme 1B-1: In a RRC configuration, both ACK/NACK and NACK only may be configured to be available for the same PUCCH resource ID. A separate indicator may be defined and included within DCI to indicate whether to apply an ACK/NACK configuration or a NACK only configuration. Accordingly, in a RRC configuration, there is no need to configure whether to support NACK only per PUCCH resource.

Even according to Scheme 1B-1, it is possible to configure whether to support NACK only in a unit of a PUCCH-config or in a unit of a PUCCH resource set. In this case, a terminal may assume that all PUCCH resources in PUCCH-config or a PUCCH resource set may also support NACK only.

Scheme 1B-2: Different PUCCH resource sets in PUCCH-config may be configured as ACK/NACK-based HARQ-ACK or NACK only-based HARQ-ACK. For example, a PUCCH-config RRC IE may include a PUCCH resource set IE for NACK only (e.g., PRI 0 to 7 are all configured as NACK only based HARQ-ACK), and a PUCCH resource set IE for ACK/NACK (e.g., PRI 0 to 7 are all configured as ACK/NACK based HARQ-ACK).

Configuration Scheme 1B-3: Different PUCCH-configs in PUCCH-configurationList may be configured as ACK/NACK-based HARQ-ACK or NACK only-based HARQ-ACK. For example, a PUCCH-configurationList RRC IE may include a PUCCH-config IE for NACK only (e.g., for a PUCCH resource set in PUCCH-config, all PUCCH resources corresponding to PRI 0 to 7 are configured as NACK only based HARQ-ACK), and a PUCCH-config IE for ACK/NACK (e.g., for a PUCCH resource set in PUCCH-config, all PUCCH resources corresponding to PRI 0 to 7 are configured as ACK/NACK-based HARQ-ACK).

In a traditional technology, up to four PUCCH resource sets for ACK/NACK may be configured by considering a payload size. One PUCCH resource set for NACK may be sufficient. For example, it may be sufficient to configure only PUCCH resource set 0 for PUCCH format 0 (PF0) and PUCCH format 1 (PF1). Accordingly, in the above-described configuration schemes, a terminal may determine a PUCCH resource set for NACK only-based HARQ-ACK in the following manner. In other words, a scheme of determining a PUCCH resource set for NACK only-based HARQ-ACK in a plurality of PUCCH resource sets configured by a base station is as follows.

Scheme 1-1: If NACK-only-based HARQ-ACK and ACK/NACK-based HARQ-ACK share the same PUCCH resource set, only a first PUCCH resource set (i.e., only a PUCCH resource set that a PUCCH resource set ID is 0) may be configured as NACK-only-based HARQ-ACK in up to 4 PUCCH resource set lists in PUCCH-config.

Alternatively, even if a first PUCCH resource set does not have a separate NACK only-based HARQ-ACK indication, only NACK only-based HARQ-ACK may be configured to be available, or both NACK only-based HARQ-ACK and ACK/NACK-based HARQ-ACK may be configured to be available in PUCCH-config for multicast.

Scheme 1-2: A base station may configure whether a first or specific PUCCH resource set is used as NACK-only-based HARQ-ACK in up to 4 PUCCH resource set lists in PUCCH-config.

Scheme 1-2A: Whether a first or specific PUCCH resource set in PUCCH-config or in a PUCCH resource set of PUCCH-config is used as NACK only-based HARQ-ACK may be indicated.

Scheme 1-2B: Whether a first PUCCH resource set is used as NACK only-based HARQ-ACK may be indicated through DCI. For example, when NACK only-based HARQ-ACK is indicated through certain DCI, a terminal may use a first or specific PUCCH resource set of PUCCH-config as NACK only-based HARQ-ACK, and determine that a PUCCH resource indicated by a PRI of corresponding DCI is a PUCCH resource within a first or specific PUCCH resource set.

Scheme 1-3: When DCI indicates NACK-only-based HARQ-ACK, a terminal may always select a PUCCH resource indicated by a PRI of DCI from a first PUCCH resource set and transmit NACK only-based HARQ-ACK.

Alternatively, if a specific PUCCH resource set is configured as NACK only-based HARQ-ACK in PUCCH-config, or if DCI indicates NACK-only-based HARQ-ACK, a terminal may always select a PUCCH resource indicated by a PRI of DCI from a specific PUCCH resource set and transmit NACK only-based HARQ-ACK.

For example, the operation of the UE (100 or 200 in FIG. 11) of the above-described step S 110 receiving configuration information from the network side (200 or 100 in FIG. 11) may be implemented by the device of FIG. 11 to be described below. For example, referring to FIG. 11, the one or more processors 102 may control one or more transceivers 106 and/or one or more memories 104, etc. to receive the configuration information, and the one or more transceivers 106 may receive the configuration information from the network side.

The UE may receive control information from the network side (S115). For example, the UE may receive downlink control information (DCI) for scheduling/activating/releasing uplink/downlink transmission from the network side.

Specifically, when the search space is configured for the configured CFR, the UE may monitor the PDCCH in the SS (search space) configured in the configured CFR, to receive DCI CRC scrambled with G-RNTI or G (group)-CS (configured scheduling)-RNTI.

For example, the operation of the UE (100 or 200 in FIG. 11) of the above-described step S115 receiving control information from the network side (200 or 100 in FIG. 11) may be implemented by the device of FIG. 11 to be described below. For example, referring to FIG. 11, the one or more processors 102 may control one or more transceivers 106 and/or one or more memories 104, etc. to receive the control information, and the one or more transceivers 106 may receive the control information from the network side.

The UE may receive the TB from the network side (S120).

Specifically, when the data unit is available on the MTCH of the MBS radio bearer (MRB) for the MBS service, the network side may construct and transmit a TB including the data unit for an SPS PDSCH occasion associated with the MTCH of the MRB for the MBS service, or associated with TMGI of the MBS service, or associated with a short ID of the MBS service, or associated with G-RNTI mapped to the MBS service, according to the service-to-resource mapping.

For group common dynamic scheduling of the TB, the network side may transmit DCI through PDCCH to the UE. The corresponding DCI may be CRC scrambled by G-RNTI, G-CS-RNTI, or CS-RNTI. The PDCCH may be implemented as a group common PDCCH or a UE-specific PDCCH.

For example, the DCI may include at least one of an identifier for the DCI format, a carrier indicator, a bandwidth part indicator, frequency domain resource assignment, time domain resource assignment, VRB-to-PRB mapping, PRB bundling size indicator, rate matching indicator, ZP CSI-RS trigger, MCS, NDI, RV, HARQ process number, downlink assignment index, TPC command for scheduled PUCCH, PUCCH resource indicator, PDSCH-to-HARQ_feedback timing indicator, an antenna port, a transmission configuration indication, an SRS request, a DMRS sequence initialization, or a priority indicator.

For group common dynamic scheduling, by group common or UE-specific RRC message or by group common or UE-specific MAC CE, the network side may provide with UE one or more of the service-resource mappings for the MBS service identified by TMGI or G-RNTI or GC-CS-RNTI. Data of the MBS service may be carried through MBS radio bearer (MRB) of a multicast traffic logical channel, that is, MTCH associated to the MBS service. RRC message may be a group common message transmitted through PTM MCCH (Multicast Control Channel) or UE-dedicated message transmitted through UE-specific DCCH (Dedicated Control Channel). The DCI scheduling PDSCH carrying the MBS service data may additionally indicate at least one of short ID, MTCH ID, MRB ID, G-RNTI value, and a TMGI value for the MBS service.

When receiving DCI CRC scrambled by G-RNTI that the UE is interested to receive, the UE may determine MBS service(s) associated with one or more of short ID, MTCH ID, MRB ID, G-RNTI value, and a TMGI value for each PDSCH occasion, based on mapping between MBS service and HPN indicated in the DCI, and/or mapping between MBS service and short ID(s) indicated in the DCI.

Then, when UE is interested in the determined MBS service(s), the UE may receive PDSCH transmission scheduled by the DCI. When the UE is not interested in the determined MBS service(s), UE may not receive PDSCH transmission scheduled by the DCI.

For example, the operation of the UE (100 or 200 in FIG. 11) of the above-described step S120 receiving the TB from the network side (200 or 100 in FIG. 11) may be implemented by the device of FIG. 11 to be described below. For example, referring to FIG. 11, the one or more processors 102 may control one or more transceivers 106 and/or one or more memories 104, etc. to receive the TB, and the one or more transceivers 106 may receive the TB from the network side.

Upon receiving group common DCI indicating PUCCH resource(s) for MBS HARQ-ACK, the UE may transmit HARQ-ACK through PUCCH after a PDSCH reception scheduled by the DCI (S125). That is, according to decoding status of PDSCH transmission, the UE may transmit HARQ feedback to the network side.

In the case of PTM scheme 1, group common DCI may indicate a single PUCCH resource indicator and a single PDSCH-to-HARQ_feedback timing indicator at least for ACK/NACK based HARQ-ACK.

Specifically, in the case of UE-specific PUCCH resource allocation for ACK/NACK based HARQ-ACK for group common DCI, different UEs in the corresponding group (unless 'PUCCH-config' for multicast is configured) may be configured with different values of at least 'PUCCH-Resource' and 'dl-DataToUL-ACK' in UE-dedicated 'PUCCH-config' for multicast or for unicast. Different UEs may be allocated with different PUCCH resources, by the same PUCCH resource indicator and the same 'PDSCH-to-HARQ_feedback timing indicator of the group common DCI.

In the case of PTP retransmission, the PUCCH resource indicator and the PDSCH-to-HARQ_feedback timing indicator in the UE-specific DCI may be interpreted based on 'PUCCH-config' for unicast, regardless of whether 'PUCCH-config' for multicast is configured or not.

Here, PRI (PUCCH Resource Indicator) may be indicated by group common DCI as follows.

As an example, UE-specific PRI list may be included in the DCI (option 1A-1). Each PRI in the corresponding list may indicate an entry corresponding to a candidate 'pucch-ResourceId' value of'PUCCH-config' for allocation of the same PUCCH resource or different PUCCH resources for different UEs in the group receiving the same DCI. Different PRI of DCI may indicate different entry in 'PUCCH-config.'

Here, a candidate 'pucch-ResourceId; value may be configured by RRC, and a different 'pucch-ResourceId' value may be configured for a different UE in the same group at least in multicast PUCCH-config.

As an additional example, a group common PRI may be included in the DCI (option 1-A-2). A single group common PRI may indicate a specific entry for a candidate 'pucch-ResourceId' value in UE-specific 'PUCCH-config' for allocation of the same or different PUCCH resources for all UEs in the group.

In addition, a candidate 'pucch-ResourceId' value may be configured by RRC. Different 'pucch-ResourceId' value may be configured for different UE in the same group at least in 'PUCCH-config' for multicast.

When 'PUCCH-config' for multicast is configured for HARQ-ACK for group common PDSCH scheduled by the group common DCI, the UE may assume that the PRI of the group common DCI indicates an entry corresponding to a candidate 'pucch-ResourceId' value in 'PUCCH-config' for multicast.

When 'PUCCH-config' for multicast is not configured for HARQ-ACK for group common PDSCH scheduled by the group common DCI, the UE may assume that the PRI of the group common DCI indicates an entry corresponding to a candidate 'pucch-ResourceId' value in 'PUCCH-config' for unicast.

K1 (PDSCH-to-HARQ_feedback timing indicator) may be indicated by group common DCI as follows.

As an example, UE-specific K1 value list may be included in the DCI (option 1B-1). Each K1 in the list may indicate the same UL slot or different UL (sub-)slot for different UE in the group.

For example, Different K1 values may be allocated to different UEs. That is, K1 may be allocated to UE1, K2 may be allocated to UE2, K3 may be allocated to UE3.

As an additional example, multiple UEs may share K1 value. For example, UE1 and UE2 may share K1 value, UE3 and UE4 may share K2 value.

As an additional example, one K1 value may be a reference, and other K1 value may be allocated based on the reference. {K1_ref, K1_offset list} may be indicated by DCI.

For example, UE1 may use K1_ref, UE2 may use K1_ref + K1_offset1, UE3 may use K1_ref + K1_offset2.

As an additional example, group common K1 value may be included in the DCI (option 1B-2). For example, a single K1 value may indicate an entry corresponding to a candidate 'dl-DataToUL-ACK' values in UE-specific 'PUCCH-config' for allocation of the same or different PUCCH resources for all UEs in the group receiving the DCI. This may be applied for the case that a DCI format is configured in UE-specific 'PUCCH-config' for the K1 value.

As an additional example, a candidate 'dl-DataToUL-ACK' value may be configured by RRC, and may be differently configured for different UE in the same group at least in 'PUCCH-config' for multicast.

As an additional example, when 'PUCCH-config' for multicast is configured for HARQ-ACK for group common PDSCH scheduled by group common DCI, UE may assume that K1 value of the group common DCI indicates an entry corresponding to a candidate 'dl-DataToUL-ACK' value in 'PUCCH-config' for multicast.

As an additional example, when 'PUCCH-config' for multicast is not configured for HARQ-ACK for group common PDSCH scheduled by group common DCI, UE may assume that K1 value of the group common DCI indicates an entry corresponding to a candidate 'dl-DataToUL-ACK' value in 'PUCCH-config' for unicast.

In addition, when the UE receives group common DCI CRC scrambled by G-RNTI and/or UE-specific DCI CRC scrambled by C-RNTI, and when Type-1 HARQ-ACK codebook is configured for 'PUCCH-config' for multicast and/or 'PUCCH-config' for unicast, UE may construct TDRA (Time Domain Resource Allocation) to generate Type-1 HARQ-ACK codebook for HARQ-ACK(s) for group common PDSCH scheduled by group common DCI and/or UE-specific PDSCH scheduled by UE-specific DCI.

If a SPS configuration is activated by a terminal based on an interested MBS service, a terminal may periodically receive SPS transmission occasions on configured downlink allocation for a SPS configuration according to the above-described equation. A terminal may consider NDI to be toggled for each reception of SPS PDSCH occasions.

For reception of a specific SPS PDSCH transmission occasion in configured downlink allocation for a SPS configuration, a terminal may consider a corresponding SPS PDSCH transmission occasion to be associated with a short ID of a MTCH, MRB, TMGI, G-RNTI and/or MBS service based on mapping between a MBS service and a SPS configuration, mapping between a HARQ Process Number (HPN) and a MBS service for a SPS configuration, and/or mapping between a MBS service and if available, a short ID, as indicated by activation DCI or retransmission DCI and/or as configured by a RRC message.

If group common SPS PDSCH(s) and unicast SPS PDSCH(s) are scheduled in the same DL slot, or if a terminal does not receive all SPS PDSCH(s), a terminal may select some SPS PDSCH(s) as follows.

Option A: A terminal may select SPS PDSCH(s) based on the ascending order of SPS configuration indexes from the lowest SPS configuration index for both group common SPS PDSCH(s) and unicast SPS PDSCH(s). A terminal may not receive all unselected SPS PDSCH(s).

A base station may configure a different SPS configuration index for group common SPS PDSCH(s) and unicast SPS PDSCH(s).

Option B If a terminal may receive all unicast SPS PDSCH(s), a terminal may select all unicast SPS PDSCH(s), and then, select group common SPS PDSCH(s) based on the ascending order of SPS configuration indexes from the lowest SPS configuration index for group common SPS PDSCH(s). A terminal may not receive all unselected SPS PDSCH(s).

If a terminal may not receive all unicast SPS PDSCH(s), a terminal may select unicast SPS PDSCH(s) based on the ascending order of SPS configuration indexes from the lowest SPS configuration index for unicast SPS PDSCH(s). A terminal may not receive all unselected SPS PDSCH(s) including all group common SPS PDSCH(s).

Option C: A terminal may select unicast SPS PDSCH(s) with a high priority based on the ascending order of SPS configuration indexes from the lowest SPS configuration index for unicast SPS PDSCH(s). Afterwards, a terminal may select group common SPS PDSCH(s) with a high priority based on the ascending order of SPS configuration indexes from the lowest SPS configuration index for group common SPS PDSCH(s). Afterwards, a terminal may select unicast SPS PDSCH(s) with a low priority based on the ascending order of SPS configuration indexes from the lowest SPS configuration index for unicast SPS PDSCH(s). Afterwards, a terminal may select group common SPS PDSCH(s) with a low priority based on the ascending order of SPS configuration indexes from the lowest SPS configuration index for group common SPS PDSCH(s). A terminal may not receive all unselected SPS PDSCH(s).

A terminal may determine a PUCCH resource only for HARQ-ACK for selected SPS PDSCH(s). In addition, a terminal may generate a HARQ-ACK information bit only for HARQ-ACK(s) for selected SPS PDSCH(s).

For the above-described options, if a terminal selects group common SPS PDSCH(s), a terminal may prioritize multicast SPS PDSCH(s) over broadcast SPS PDSCH(s) regardless of a SPS configuration index for multicast/broadcast SPS PDSCH(s).

When TB decoding in a PDSCH transmission occasion is not successful, UE may transmit HARQ NACK to the network side through a PUCCH resource in the configured UL CFR.

Using PUCCH resource, the UE may transmit HARQ-ACK for other PDSCH transmissions such as unicast SPS PDSCH, dynamic unicast PDSCH, PTP retransmission and/or dynamic group common PDSCH.

Here, for multiplexing HARQ-ACKs on PUCCH in a (sub)slot for SPS PDSCH for multicast, SPS PDSCH for unicast, dynamically scheduled multicast PDSCH, and/or dynamically scheduled unicast PDSCH, UE may construct a codebook based on one or more of the above options.

When RSRP threshold is configured, the UE may use NACK only based HARQ-ACK based on the measured RSRP of a serving cell. When the measured RSRP is higher than a threshold, NACK only based HARQ-ACK may be transmitted through group common PUCCH resource indicated by PRI of DCI. When the measured RSRP is lower than the threshold, NACK only based HARQ-ACK may be transformed into ACK/NACK based HARQ-ACK on UE-specific PUCCH resource indicated by PRI of DCI.

Meanwhile, when the 'pdsch-AggregationFactor' is configured for a G-RNTI or when 'repetition_number' is indicated by the network side by DCI, the TB scheduled by group common DCI may be repeated for Nth HARQ transmission of the TB within each symbol allocation among each of the 'pdsch-AggregationFactor' consecutive slots or among each of the 'repetition_number' consecutive slots, if configured.

A terminal may also use the same PUCCH resource to transmit HARQ-ACK for another PDSCH transmission such as unicast. In this case, a PUCCH resource for multiplexing of unicast (i.e., terminal-specific data transmission) and/or multicast (i.e., group common data transmission) may be determined as follows.

For multiplexing of NACK only HARQ-ACKs for multiple group common SPS PDSCHs, if PUCCH-config for multicast is configured for NACK only, a terminal may select a PUCCH resource based on sps-PUCCH-AN-List of PUCCH-config for multicast.

If PUCCH-config for multicast is not configured, PUCCH-config for unicast may be used and NACK only HARQ-ACK may be transformed to ACK/NACK-based HARQ-ACK.

For multiplexing of NACK only HARQ-ACK and a scheduling request (SR) for multiple group common SPS PDSCHs, regardless of whether PUCCH-config for multicast is configured for NACK only, a terminal may select a PUCCH resource based on sps-PUCCH-AN-List of PUCCH-config.

Alternatively, when PUCCH-config for multicast is configured for ACK/NACK-based HARQ-ACK, a terminal may select a PUCCH resource based on sps-PUCCH-AN-List of PUCCH-config for multicast.

For multiplexing of NACK only HARQ-ACK for multiple group common SPS PDSCHs and HARQ-ACK (and if any, a SR) for a unicast SPS PDSCH, regardless of whether PUCCH-config for multicast is configured for NACK only, a terminal may select a PUCCH resource based on sps-PUCCH-AN-List of PUCCH-config for unicast.

Alternatively, when PUCCH-config for multicast is configured for ACK/NACK-based HARQ-ACK, a terminal may select a PUCCH resource based on sps-PUCCH-AN-List of PUCCH-config for multicast.

For multiplexing of NACK only HARQ-ACK for group common SPS PDSCHs and ACK/NACK-based HARQ-ACK for group common SPS PDSCHs, a terminal may select a PUCCH resource based on sps-PUCCH-AN-List of PUCCH-config for multicast.

If PUCCH-config for multicast is not configured, a terminal may select a PUCCH resource based on sps-PUCCH-AN-List of PUCCH-config for unicast.

For multiplexing of NACK only HARQ-ACK for group common SPS PDSCHs and ACK/NACK-based HARQ-ACK and a SR for group common SPS PDSCHs, a terminal may select a PUCCH resource based on sps-PUCCH-AN-List of PUCCH-config for unicast.

If a serving cell is deactivated and a CFR is configured for a serving cell, a terminal may not receive a multicast PDSCH on a corresponding serving cell.

For deactivation of a serving cell where a CFR is configured, a terminal may determine a set of $M_{A,c}$ occasions for a Type 1 HARQ-ACK codebook according to one of the following options.

Option A: Regardless of whether a CFR is associated with a DL BWP provided by a firstActiveDownlinkBWP-Id parameter, a terminal may determine a set of $M_{A,c}$ occasions by assuming that it is not configured to monitor a PDCCH for a multicast DCI format for serving cell c.

Option B If a CFR is associated with a DL BWP provided by a firstActiveDownlinkBWP-Id parameter, a terminal may determine a set of $M_{A,c}$ occasions by assuming that it is configured to monitor a PDCCH for a multicast DCI format for serving cell c.

Option B-1: If any CFR is not associated with a DL BWP provided by a firstActiveDownlinkBWP-Id parameter, a terminal may determine a set of $M_{A,c}$ occasions by assuming that it is not configured to monitor a PDCCH for a multicast DCI format for serving cell c.

Option B-2: If any CFR is not associated with a DL BWP provided by a firstActiveDownlinkBWP-Id parameter, but a CFR is associated with a DL BWP of a serving cell, a terminal may use a DW BWP to determine a set of $M_{A,c}$ occasions for candidate PDSCH reception by assuming that it is configured to monitor a PDCCH for a multicast DCI format for serving cell c.

If there is more than one DL BWP associated with a CFR for a serving cell, a DL BWP may be indicated by a base station or may be selected based on the lowest (or highest) BWP index.

If there is no DL BWP associated with a CFR for a serving cell, a terminal may determine a set of $M_{A,c}$ occasions by assuming that it is not configured to monitor a PDCCH for a multicast DCI format for serving cell c.

For example, the operation of the UE (100 or 200 in FIG. 11) of the above-described step S125 transmitting the HARQ-ACK to the network side (200 or 100 in FIG. 11) may be implemented by the device of FIG. 11 to be described below. For example, referring to FIG. 11, the one or more processors 102 may control one or more transceivers 106 and/or one or more memories 104, etc. to transmit the HARQ-ACK, and the one or more transceivers 106 may transmit the HARQ-ACK to the network side.

Receiving HARQ NACK of a TCI state, the network side may retransmit, using the TCI state, PDCCH and PDSCH in the DL CFR configured for retransmission of TB (S130).

UE may monitor group common and/or UE-specific PDCCH using the TCI state for a search space configured in DL CFR to receive a retransmission of the TB. The network side may retransmit the TB to one of the UEs in the group by UE-specific PDCCH. Meanwhile, other UE(s) may not receive the retransmission of the TB, as it has successfully received the TB.

When the UE receives the PDCCH for the retransmission of the TB, the UE may receive the PDSCH scheduled by the DCI of the PDCCH. When the UE successfully decodes the TB in the PDSCH, the UE may consider that the decoded TB is associated with MTCH, MRB, TMGI, G-RNTI and/or short ID of MBS service, based on mapping between MBS service and HPN (HARQ Process Number) indicated by the DCI, and/or mapping between MBS service and short ID(s) indicated by the DCI.

When TB decoding in PDSCH transmission occasion is successful, the UE may transmit HARQ ACK to the network side through PUCCH resource in UL CFR configured according to the above-described procedure. Using PUCCH resource, the UE may transmit HARQ-ACK for other PDSCH transmission such as unicast SPS PDSCH, dynamic unicast PDSCH, PTP retransmission and/or dynamic group common PDSCH.

In this case, for multiplexing HARQ-ACKs on PUCCH in a (sub)slot for SPS PDSCH for multicast, SPS PDSCH for unicast, dynamically scheduled multicast PDSCH, and/or dynamically scheduled unicast PDSCH, the UE may construct a codebook based on one or more of the above-described options/embodiments.

For example, the operation of the UE (100 or 200 in FIG. 11) of the above-described step S130 receiving TB retransmission from the network side (200 or 100 in FIG. 11) may be implemented by the device of FIG. 11 to be described below. For example, referring to FIG. 11, the one or more processors 102 may control one or more transceivers 106 and/or one or more memories 104, etc. to receive TB retransmission, and the one or more transceivers 106 may receive TB retransmission from the network side.

_General Device to which the Present Disclosure may be applied_

FIG. 11 is a diagram which illustrates a block diagram of a wireless communication device according to an embodiment of the present disclosure.

In reference to FIG. 11, a first wireless device 100 and a second wireless device 200 may transmit and receive a wireless signal through a variety of radio access technologies (e.g., LTE, NR).

A first wireless device 100 may include one or more processors 102 and one or more memories 104 and may additionally include one or more transceivers 106 and/or one or more antennas 108. A processor 102 may control a memory 104 and/or a transceiver 106 and may be configured to implement description, functions, procedures, proposals, methods and/or operation flow charts included in the present disclosure. For example, a processor 102 may transmit a wireless signal including first information/signal through a transceiver 106 after generating first information/signal by processing information in a memory 104. In addition, a processor 102 may receive a wireless signal including second information/signal through a transceiver 106 and then store information obtained by signal processing of second information/signal in a memory 104. A memory 104 may be connected to a processor 102 and may store a variety of information related to an operation of a processor 102. For example, a memory 104 may store a software code including commands for performing all or part of processes controlled by a processor 102 or for performing description, functions, procedures, proposals, methods and/or operation flow charts included in the present disclosure. Here, a processor 102 and a memory 104 may be part of a communication modem/circuit/chip designed to implement a wireless communication technology (e.g., LTE, NR). A transceiver 106 may be connected to a processor 102 and may transmit and/or receive a wireless signal through one or more antennas 108. A transceiver 106 may include a transmitter and/or a receiver. A transceiver 106 may be used together with a RF (Radio Frequency) unit. In the present disclosure, a wireless device may mean a communication modem/circuit/chip.

A second wireless device 200 may include one or more processors 202 and one or more memories 204 and may additionally include one or more transceivers 206 and/or one or more antennas 208. A processor 202 may control a memory 204 and/or a transceiver 206 and may be configured to implement description, functions, procedures, proposals, methods and/or operation flows charts included in the present disclosure. For example, a processor 202 may generate third information/signal by processing information in a memory 204, and then transmit a wireless signal including third information/signal through a transceiver 206. In addition, a processor 202 may receive a wireless signal including fourth information/signal through a transceiver 206, and then store information obtained by signal processing of fourth information/signal in a memory 204. A memory 204 may be connected to a processor 202 and may store a variety of information related to an operation of a processor 202. For example, a memory 204 may store a software code including commands for performing all or part of processes controlled by a processor 202 or for performing description, functions, procedures, proposals, methods and/or operation flow charts included in the present disclosure. Here, a processor 202 and a memory 204 may be part of a communication modem/circuit/chip designed to implement a wireless communication technology (e.g., LTE, NR). A transceiver 206 may be connected to a processor 202 and may transmit and/or receive a wireless signal through one or more antennas 208. A transceiver 206 may include a transmitter and/or a receiver. A transceiver 206 may be used together with a RF unit. In the present disclosure, a wireless device may mean a communication modem/circuit/chip.

Hereinafter, a hardware element of a wireless device 100, 200 will be described in more detail. It is not limited thereto, but one or more protocol layers may be implemented by one or more processors 102, 202. For example, one or more processors 102, 202 may implement one or more layers (e.g., a functional layer such as PHY, MAC, RLC, PDCP, RRC, SDAP). One or more processors 102, 202 may generate one or more PDUs (Protocol Data Unit) and/or one or more SDUs (Service Data Unit) according to description, functions, procedures, proposals, methods and/or operation flow charts included in the present disclosure. One or more processors 102, 202 may generate a message, control information, data or information according to description, functions, procedures, proposals, methods and/or operation flow charts disclosed in the present disclosure. One or more processors 102, 202 may generate a signal (e.g., a baseband signal) including a PDU, a SDU, a message, control information, data or information according to functions, procedures, proposals and/or methods included in the present disclosure to provide it to one or more transceivers 106, 206. One or more processors 102, 202 may receive a signal (e.g., a baseband signal) from one or more transceivers 106, 206 and obtain a PDU, a SDU, a message, control information, data or information according to description, functions, procedures, proposals, methods and/or operation flow charts included in the present disclosure.

One or more processors 102, 202 may be referred to as a controller, a micro controller, a micro processor or a micro computer. One or more processors 102, 202 may be implemented by a hardware, a firmware, a software, or their combination. In an example, one or more ASICs(Application Specific Integrated Circuit), one or more DSPs(Digital Signal Processor), one or more DSPDs(Digital Signal Processing Device), one or more PLDs(Programmable Logic Device) or one or more FPGAs(Field Programmable Gate Arrays) may be included in one or more processors 102, 202. Description, functions, procedures, proposals, methods and/or operation flow charts included in the present disclosure may be implemented by using a firmware or a software and a firmware or a software may be implemented to include a module, a procedure, a function, etc. A firmware or a software configured to perform description, functions, procedures, proposals, methods and/or operation flow charts included in the present disclosure may be included in one or more processors 102, 202 or may be stored in one or more memories 104, 204 and driven by one or more processors 102, 202. Description, functions, procedures, proposals, methods and/or operation flow charts included in the present disclosure may be implemented by using a firmware or a software in a form of a code, a command and/or a set of commands.

One or more memories 104, 204 may be connected to one or more processors 102, 202 and may store data, a signal, a message, information, a program, a code, an instruction and/or a command in various forms. One or more memories 104, 204 may be configured with ROM, RAM, EPROM, a flash memory, a hard drive, a register, a cash memory, a computer readable storage medium and/or their combination. One or more memories 104, 204 may be positioned inside and/or outside one or more processors 102, 202. In addition, one or more memories 104, 204 may be connected to one or more processors 102, 202 through a variety of technologies such as a wire or wireless connection.

One or more transceivers 106, 206 may transmit user data, control information, a wireless signal/channel, etc. mentioned in methods and/or operation flow charts, etc. of the present disclosure to one or more other devices. One or more transceivers 106, 206 may receiver user data, control information, a wireless signal/channel, etc. mentioned in description, functions, procedures, proposals, methods and/or operation flow charts, etc. included in the present disclosure from one or more other devices. For example, one or more transceivers 106, 206 may be connected to one or more processors 102, 202 and may transmit and receive a wireless signal. For example, one or more processors 102, 202 may control one or more transceivers 106, 206 to transmit user data, control information or a wireless signal to one or more other devices. In addition, one or more processors 102, 202 may control one or more transceivers 106, 206 to receive user data, control information or a wireless signal from one or more other devices. In addition, one or more transceivers 106, 206 may be connected to one or more antennas 108, 208 and one or more transceivers 106, 206 may be configured to transmit and receive user data, control information, a wireless signal/channel, etc. mentioned in description, functions, procedures, proposals, methods and/or operation flow charts, etc. included in the present disclosure through one or more antennas 108, 208. In the present disclosure, one or more antennas may be a plurality of physical antennas or a plurality of logical antennas (e.g., an antenna port). One or more transceivers 106, 206 may convert a received wireless signal/channel, etc. into a baseband signal from a RF band signal to process received user data, control information, wireless signal/channel, etc. by using one or more processors 102, 202. One or more transceivers 106, 206 may convert user data, control information, a wireless signal/channel, etc. which are processed by using one or more processors 102, 202 from a baseband signal to a RF band signal. Therefor, one or more transceivers 106, 206 may include an (analogue) oscillator and/or a filter.

Embodiments described above are that elements and features of the present disclosure are combined in a predetermined form. Each element or feature should be considered to be optional unless otherwise explicitly mentioned. Each element or feature may be implemented in a form that it is not combined with other element or feature. In addition, an embodiment of the present disclosure may include combining a part of elements and/or features. An order of operations described in embodiments of the present disclosure may be changed. Some elements or features of one embodiment may be included in other embodiment or may be substituted with a corresponding element or a feature of other embodiment. It is clear that an embodiment may include combining claims without an explicit dependency relationship in claims or may be included as a new claim by amendment after application.

It is clear to a person skilled in the pertinent art that the present disclosure may be implemented in other specific form in a scope not going beyond an essential feature of the present disclosure. Accordingly, the above-described detailed description should not be restrictively construed in every aspect and should be considered to be illustrative. A scope of the present disclosure should be determined by reasonable construction of an attached claim and all changes within an equivalent scope of the present disclosure are included in a scope of the present disclosure.

A scope of the present disclosure includes software or machine-executable commands (e.g., an operating system, an application, a firmware, a program, etc.) which execute an operation according to a method of various embodiments in a device or a computer and a non-transitory computer-readable medium that such a software or a command, etc. are stored and are executable in a device or a computer. A command which may be used to program a processing system performing a feature described in the present disclosure may be stored in a storage medium or a computer-readable storage medium and a feature described in the present disclosure may be implemented by using a computer program product including such a storage medium. A storage medium may include a high-speed random-access memory such as DRAM, SRAM, DDR RAM or other random-access solid state memory device, but it is not limited thereto, and it may include a nonvolatile memory such as one or more magnetic disk storage devices, optical disk storage devices, flash memory devices or other nonvolatile solid state storage devices. A memory optionally includes one or more storage devices positioned remotely from processor(s). A memory or alternatively, nonvolatile memory device(s) in a memory include a non-transitory computer-readable storage medium. A feature described in the present disclosure may be stored in any one of machine-readable mediums to control a hardware of a processing system and may be integrated into a software and/or a firmware which allows a processing system to interact with other mechanism utilizing a result from an embodiment of the present disclosure. Such a software or a firmware may include an application code, a device driver, an operating system and an execution environment/container, but it is not limited thereto.

Here, a wireless communication technology implemented in a wireless device 100, 200 of the present disclosure may include Narrowband Internet of Things for a low-power communication as well as LTE, NR and 6G. Here, for example, an NB-IoT technology may be an example of a LPWAN(Low Power Wide Area Network) technology, may be implemented in a standard of LTE Cat NB1 and/or LTE Cat NB2, etc. and is not limited to the above-described name. Additionally or alternatively, a wireless communication technology implemented in a wireless device 100, 200 of the present disclosure may perform a communication based on a LTE-M technology. Here, in an example, a LTE-M technology may be an example of a LPWAN technology and may be referred to a variety of names such as an eMTC (enhanced Machine Type Communication), etc. For example, an LTE-M technology may be implemented in at least any one of various standards including 1) LTE CAT 0, 2) LTE Cat M1, 3) LTE Cat M2, 4) LTE non-BL(non-Bandwidth Limited), 5) LTE-MTC, 6) LTE Machine Type Communication, and/or 7) LTE M and so on and it is not limited to the above-described name. Additionally or alternatively, a wireless communication technology implemented in a wireless device 100, 200 of the present disclosure may include at least any one of a ZigBee, a Bluetooth and a low power wide area network (LPWAN) considering a low-power communication and it is not limited to the above-described name. In an example, a ZigBee technology may generate PAN(personal area networks) related to a small/low-power digital communication based on a variety of standards such as IEEE 802.15.4, etc. and may be referred to as a variety of names.

[Industrial Applicability]

A method proposed by the present disclosure is mainly described based on an example applied to 3GPP LTE/LTE-A, 5G system, but may be applied to various wireless communication systems other than the 3GPP LTE/LTE-A, 5G system.

**Claims**

1. A method for transmitting hybrid automatic repeat and request(HARQ)-acknowledgement (ACK) information by a terminal in a wireless communication system, the method comprising:

   generating N (N>1) HARQ-ACK information bits related to a second HARQ-ACK report mode; and
   transmitting, to a network, HARQ-ACK information, in one physical uplink control channel (PUCCH) with applying one of a first scheme according to a first HARQ-ACK report mode, or a second scheme by selecting one PUCCH resource among PUCCH resource sets based on values of the N HARQ-ACK information bits,
   wherein one of the first scheme or the second scheme is applied based on a configuration by the network.

2. The method of claim 1, wherein:
   for the second scheme, the PUCCH resource set includes $2^N$-1 PUCCH resource candidates.

3. The method of claim 2, wherein:
   each of the PUCCH resource candidates corresponds to a different combination of the values of the N HARQ-ACK information bits.

4. The method of claim 1, wherein:
   the first scheme includes transforming and multiplexing the N HARQ-ACK information bits of the second HARQ-ACK report mode into HARQ-ACK information bits of the first HARQ-ACK report mode.

5. The method of claim 4, wherein:
   based on the HARQ-ACK information bits of the first HARQ-ACK report mode being provided for the N HARQ-ACK information bits of the second HARQ-ACK report mode according to the first scheme, a PUCCH resource is determined based on a PUCCH resource indicator field included in a multicast downlink control information (DCI) format.

6. The method of claim 5, wherein:
   the multicast DCI format is a last DCI format among at least one multicast DCI format.

7. The method of claim 5, wherein:
   the multicast DCI format is CRC(cyclic redundancy check)-scrambled with a group-radio network temporary identifier (G-RNTI) or a G-configured scheduling(G-CS)-RNTI.

8. The method of claim 1, wherein:
   the N HARQ-ACK information bits are generated for at least one of at least one multicast DCI format or at least one multicast physical downlink shared channel (PDSCH) received from the network.

9. The method of claim 1, wherein:
the second scheme is applied to N=k, and the first scheme is applied to N>k according to a configuration of the base station.

10. The method of claim 1, wherein:
the k is 2, 3, or 4.

11. The method of claim 1, wherein:
the first HARQ-ACK report mode includes that an ACK value or a non-acknowledgement (NACK) value based on whether a transport block being successfully decoded is generated as the HARQ-ACK information.

12. The method of claim 1, wherein:
the second HARQ-ACK report mode includes that HARQ-ACK information including only ACK values is not transmitted, and HARQ-ACK information including a NACK value is transmitted.

13. A terminal for transmitting hybrid automatic repeat and request (HARQ)-acknowledgement (ACK) information in a wireless communication system, the terminal comprising:

at least one transceiver; and
at least one processor connected to the at least one transceiver,
wherein the at least one processor is configured to:

generate N (N>1) HARQ-ACK information bits related to a second HARQ-ACK report mode; and
transmit, through the at least one transceiver to a network, HARQ-ACK information, in one physical uplink control channel (PUCCH) with applying one of a first scheme according to a first HARQ-ACK report mode, or a second scheme by selecting one PUCCH resource among PUCCH resource sets based on values of the N HARQ-ACK information bits,

wherein one of the first scheme or the second scheme is applied based on a configuration by the network.

14. A method for receiving hybrid automatic repeat and request (HARQ)-acknowledgement (ACK) information by a base station in a wireless communication system, the method comprising:

transmitting, to a terminal, at least one of at least one multicast DCI format or at least one multicast physical downlink shared channel (PDSCH); and
for N (N>1) HARQ-ACK information bits related to a second HARQ-ACK report mode generated based on at least one of the at least one DCI format or the at least one PDSCH, receiving, from the terminal, in one physical uplink control channel (PUCCH), HARQ-ACK information to which one of a first scheme according to a first HARQ-ACK report mode, or a second scheme by selecting one PUCCH resource among PUCCH resource sets based on values of the N HARQ-ACK information bits is applied,
wherein one of the first scheme or the second scheme is applied based on a configuration by the network.

15. A base station for receiving hybrid automatic repeat and request (HARQ)-acknowledgement (ACK) information in a wireless communication system, the base station comprising:

at least one transceiver; and
at least one processor connected to the at least one transceiver,
wherein the at least one processor is configured to:

transmit, through the at least one transceiver, to a terminal, at least one of at least one multicast DCI format or at least one multicast physical downlink shared channel (PDSCH); and
for N (N>1) HARQ-ACK information bits related to a second HARQ-ACK report mode generated based on at least one of the at least one DCI format or the at least one PDSCH, receive, through the at least one transceiver, from the terminal, in one physical uplink control channel (PUCCH), HARQ-ACK information to which one of a first scheme according to a first HARQ-ACK report mode, or a second scheme by selecting one PUCCH resource among PUCCH resource sets based on values of the N HARQ-ACK information bits is applied,

wherein one of the first scheme or the second scheme is applied based on a configuration by the network.

16. A processing unit configured to control a terminal in a wireless communication system, the processing unit comprising:

at least one processor; and
at least one computer memory which is operably connected to the at least one processor and stores instructions for performing a method according to any one of Claim 1 to Claim 12 based on being executed by the at least one processor.

17. At least one non-transitory computer readable medium storing at least one instruction, wherein:
the at least one instruction controls a device to perform a method according to any one of Claim 1 to Claim 12 in a wireless communication system by being executed by at least one processor.

FIG.1

# FIG.2

Radio Frame 10ms

Fixed Size

Subframe 1ms

| 0 | 1 | 2 | 3 | 4 | 5 | 6 | 7 | 8 | 9 |

Subframe ={1,2,4} Slots

Slot

| 0 | 1 | 2 | 3 |

Slot={7,14} Symbols

Symbol

| 0 | 1 | 2 | 3 | 4 | 5 | 6 | 7 | 8 | 9 | 10 | 11 | 12 | 13 |

Size depends on subcarrier spacing

Mini-Slot (URLLC)

Mini-Slot={2,4,7} Symbols

FIG.3

One Subframe

$14 \cdot 2^{\mu}$ OFDM Symbol

$k = N_{RB}^{\mu} N_{SC}^{RB} - 1$

Resource Block

Resource Element
- In a resource grid, $(k, \bar{l})$
- In a resource block, $(k, l)$

$N_{RB}^{\mu} N_{SC}^{RB} - 1$ Subcarrier

$N_{SC}^{RB}$ Subcarrier

$k = 0$

$l = 0$

$l = 14 \cdot 2^{\mu} - 1$

# FIG.4

# FIG.5

Resource grid

A carrier
(up to 3300 subcarriers,i.e.,275 RBs)

A BWP

1 RB=12 subcarrier

1 RE

1 subcarrier

1 Symbol

l=0 ·····

k=0

FIG.6

INITIAL CELL
SEARCH

SYSTEM
INFORMATION
RECEPTION

RANDOM ACCESS PROCEDURE

GENERAL DL/UL Tx/Rx

PSS/SSS&
[DLRS]&
PBCH

PDCCH/
PDSCH
(BCCH)

PRACH

PDCCH/
PDSCH

PUSCH

PDCCH/
PDSCH

PDCCH/
PDSCH

PUSCH/
PUCCH

S601

S602

S603

S604

S605

S606

S607

S608

· DL/UL ACK/NACK
· UE CQI/PMI RI REPORT
  USING PUSCH AND PUCCH

FIG.7

EP 4 429 142 A1

## FIG.8

| |
|---|
| Generate N HARQ-ACK information bits related to second HARQ-ACK report mode |

S810

↓

| |
|---|
| Transmit, to network, in one PUCCH, HARQ-ACK information with applying one of first scheme or second scheme |

S820

## FIG.9

| |
|---|
| Transmit, to terminal, at least one of at least one multicast DCI or at least one multicast PDSCH |

S910

↓

| |
|---|
| For N HARQ-ACK information bits related to second HARQ-ACK report mode, receive, in one PUCCH, HARQ-ACK information to which one of first scheme or second scheme is applied |

S920

# FIG.10

Network Side                                               UE

MBS service related message ⟵ S105

Configuration information ⟶ S110

Control information ⟶ S115

TB ⟶ S120

HARQ-ACK ⟵ S125

TB retransmission ⟶ S130

FIG.11

## INTERNATIONAL SEARCH REPORT

| International application No. |
|---|
| **PCT/KR2022/017280** |

**A. CLASSIFICATION OF SUBJECT MATTER**

**H04L 1/16**(2006.01)i; **H04L 1/18**(2006.01)i; **H04L 5/00**(2006.01)i; **H04W 72/12**(2009.01)i; **H04W 72/04**(2009.01)i

According to International Patent Classification (IPC) or to both national classification and IPC

**B. FIELDS SEARCHED**

Minimum documentation searched (classification system followed by classification symbols)

H04L 1/16(2006.01); H04L 1/18(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: HARQ-ACK 피드백(feedback), NACK-전용(only), 충돌(collision), 오버랩 (overlap), PUCCH 자원(resource)

**C. DOCUMENTS CONSIDERED TO BE RELEVANT**

| Category* | Citation of document, with indication, where appropriate, of the relevant passages | Relevant to claim No. |
|---|---|---|
| X<br>Y | ZTE. Discussion on mechanisms to Improve Reliability for RRC_CONNECTED UEs. R1-2108852, 3GPP TSG RAN WG1 Meeting #106b-e, e-Meeting. 30 September 2021.<br>See sections 3.1-3.3; and table 1. | 1-6,8-17<br>7 |
| Y | LG ELECTRONICS INC. Mechanisms to improve Reliability of Broadcast/Multicast service. R1-2109984, 3GPP TSG RAN WG1 Meeting #106b-e, e-Meeting. 02 October 2021.<br>See section 4. | 7 |
| X | NTT DOCOMO, INC. Discussion on mechanisms to improve reliability for multicast for RRC_CONNECTED UEs. R1-2109702, 3GPP TSG RAN WG1 Meeting #106b-e, e-Meeting. 01 October 2021.<br>See sections 2.5.1-2.5.2. | 1,13-17 |
| X | ERICSSON. Discussion on reliability mechanisms for NR MBS. R1-2110356, 3GPP TSG RAN WG1 Meeting #106b-e, e-Meeting. 01 October 2021.<br>See sections 2.1.1.1-2.1.1.4. | 1,13-17 |

☑ Further documents are listed in the continuation of Box C.  ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **21 February 2023** | **21 February 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
| --- |
| **PCT/KR2022/017280** |

**C.    DOCUMENTS CONSIDERED TO BE RELEVANT**

| Category* | Citation of document, with indication, where appropriate, of the relevant passages | Relevant to claim No. |
| --- | --- | --- |
| A | WO 2021-164682 A1 (MEDIATEK SINGAPORE PTE. LTD.) 26 August 2021 (2021-08-26)<br>See paragraphs [0029]-[0051]; and figure 3. | 1-17 |

INTERNATIONAL SEARCH REPORT
Information on patent family members

International application No.

**PCT/KR2022/017280**

| Patent document cited in search report | Publication date (day/month/year) | Patent family member(s) | Publication date (day/month/year) |
|---|---|---|---|
| WO 2021-164682 A1 | 26 August 2021 | WO 2021-163836 A1 | 26 August 2021 |

Form PCT/ISA/210 (patent family annex) (July 2022)